# EUROPEAN PATENT APPLICATION

(11) **EP 4 672 092 A1**
(43) Date of publication of application: **31.12.2025**
(21) Application number: 24315313.7
(22) Date of filing: 28.06.2024
(51) Int. Cl.: G06N 5/01, G06N 5/025, G06N 20/20

(54) **DEVICE, SYSTEM AND METHOD FOR ADJUSTING OPERATION OF A PROGRAMMATIC APPLICATION USING AN ENSEMBLE OF DECISION TREES**

(71) Applicant: Amadeus S.A.S., 06410 Biot (FR)
(72) Inventor: Cao, Honaliu, 06410 Biot (FR); Berranger, Jean-Alexis, 06410 Biot (FR); Chenavas, Jessy, 06410 Biot (FR); Domingues, Nicolas, 06410 Biot (FR); Smith, Joel, 06410 Biot (FR); Li, Shuang, 06410 Biot (FR)
(74) Representative: Samson & Partner Patentanwälte mbB

(57) **Abstract**

A computing device receives: input and output from a programmatic application that refines given resource usage; and feedback data indicating feedback regarding the output from the programmatic application, the feedback data including negative feedback indicating a subset of the output that was changed or indicated as poor output. The computing device builds a prediction model comprising an ensemble of decision trees using the input and the output. Based on the feedback data, the computing device extracts, from the prediction model, new rules, which indicate instances of when the output is further refinable, the new rules covering at least a given portion of the output associated with negative feedback. The computing device adjusts the programmatic application, based on the new rules.

## Description

### FIELD

The specification relates generally to prediction algorithms, and specifically to a device, system and method for adjusting operation of a programmatic application using an ensemble of decision trees.

### BACKGROUND

Programmatic algorithms based on constraints and/or rules are widely used across all industries to provide efficient and effective solutions for complex systems. However, such kind of systems generally operate using predetermined constraints and/or rules, which are often incomplete, and determining such constraints and/or rules can be complex, such explicit and implicit constraints and/or rules can be missing from such a system.

### SUMMARY

A first aspect of the present specification provides a method comprising: receiving, at a computing device: input and output from a programmatic application that refines given resource usage; and feedback data indicating feedback regarding the output from the programmatic application, the feedback data including negative feedback indicating a subset of the output that was changed or indicated as poor output; building, via the computing device, a prediction model, comprising an ensemble of decision trees, using the input and the output; based on the feedback data, extracting, via the computing device, from the prediction model, new rules, which indicate instances of when the output is further refinable, the new rules covering at least a given portion of the output associated with negative feedback; and adjusting, via the computing device, the programmatic application, based on the new rules.

At the method of the first aspect, extracting the new rules from the prediction model may comprise: for each decision path in each decision tree of the prediction model, identifying, using the feedback data, respective numbers of respective outputs that were changed and not changed; and iteratively extracting the new rules from the prediction model, wherein, for each iteration: a respective new rule is extracted that comprises a portion of a decision tree that includes one decision path linked to a leaf node; and the output associated with the negative feedback, and covered by the respective new rule, is removed from a target pool that initially comprises all of the output associated with the negative feedback.

At the method of the first aspect, the new rules extracted from the prediction model may maximize one or more of: confidence of the feedback data being correctly predicted by the new rules as indicated by a confidence metric; and a number of correctly predicted negative feedbacks, as indicated by the feedback data, covered by the new rules.

At the method of the first aspect, the new rules extracted from the prediction model may minimize one or more of: complexity of the new rules; a total number of the new rules; and redundancy of the feedback data covered by the new rules.

At the method of the first aspect, extracting the new rules from the prediction model may comprise: for each decision path in each decision tree of the prediction model, identifying, using the feedback data, respective numbers of respective outputs that were changed and not changed; and iteratively extracting the new rules from the prediction model, wherein, for each iteration: a respective new rule is extracted that comprises a portion of a decision tree that includes one decision path linked to a leaf node; and the output associated with the negative feedback, and covered by the respective new rule, is removed from a target pool that initially comprises all of the output associated with the negative feedback, wherein the new rules extracted from the prediction model maximize one or more of: confidence of the feedback data being correctly predicted by the new rules as indicated by a confidence metric; and a number of correctly predicted negative feedbacks, as indicated by the feedback data, covered by the new rules, and wherein the new rules extracted from the prediction model minimize one or more of: complexity of the new rules; a total number of the new rules; and redundancy of the feedback data covered by the new rules.

The method of the first aspect may further comprise: adjusting a simulation of the programmatic application based on the new rules as extracted; and using the input from the programmatic application as corresponding input to the simulation to determine whether outputs corresponding to the negative feedback are changed, using the simulation, to changed outputs or improved outputs. In some these examples, method of the first aspect may further comprise: adjusting the programmatic application, based on the new rules, only when the outputs corresponding to the negative feedback are changed, using the simulation, to the changed outputs or the improved outputs. In others of these examples, method of the first aspect may further comprise: receiving confirmation data confirming that the outputs corresponding to the negative feedback are changed, using the simulation, to the changed outputs or the improved outputs; and adjusting, via the computing device, of the programmatic application based on the new rules only when the confirmation data is received.

At the method of the first aspect, the new rules may represent one or more of: changes to constraints of mathematical algorithms of the programmatic application; new constraints to the mathematical algorithms of the programmatic application; changes to existing code of the programmatic application; and new respective code of the programmatic application.

A second aspect of the present specification provides a computing device comprising: a controller; and a computer-readable storage medium having stored thereon program instructions that, when executed by the controller, causes the controller to perform a set of operations comprising: receiving: input and output from a programmatic application that refines given resource usage; and feedback data indicating feedback regarding the output from the programmatic application, the feedback data including negative feedback indicating a subset of the output that was changed or indicated as poor output; building a prediction model comprising an ensemble of decision trees using the input and the output; based on the feedback data, extracting, from the prediction model, new rules, which indicate instances of when the output is further refinable, the new rules covering at least a given portion of the output associated with negative feedback; and adjusting the programmatic application, based on the new rules.

The computing device of the second aspect may be separate from a respective computing device implementing the programmatic application, such as a resource management device. In some examples, the computing device of the second aspect may further comprise a communication interface, and the computing device and the resource management device may communicate via the communication interface.

At the computing device of the second aspect, extracting the new rules from the prediction model may comprise: for each decision path in each decision tree of the prediction model, identifying, using the feedback data, respective numbers of respective outputs that were changed and not changed; and iteratively extracting the new rules from the prediction model, wherein, for each iteration: a respective new rule is extracted that comprises a portion of a decision tree that includes one decision path linked to a leaf node; and the output associated with the negative feedback, and covered by the respective new rule, is removed from a target pool that initially comprises all of the output associated with the negative feedback.

At the computing device of the second aspect, the new rules extracted from the prediction model may maximize one or more of: confidence of the feedback data being correctly predicted by the new rules as indicated by a confidence metric; and a number of correctly predicted negative feedbacks, as indicated by the feedback data, covered by the new rules.

At the computing device of the second aspect, the new rules extracted from the prediction model may minimize one or more of: complexity of the new rules; a total number of the new rules; and redundancy of the feedback data covered by the new rules.

At the computing device of the second aspect, extracting the new rules from the prediction model may comprise: for each decision path in each decision tree of the prediction model, identifying, using the feedback data, respective numbers of respective outputs that were changed and not changed; and iteratively extracting the new rules from the prediction model, wherein, for each iteration: a respective new rule is extracted that comprises a portion of a decision tree that includes one decision path linked to a leaf node; and the output associated with the negative feedback, and covered by the respective new rule, is removed from a target pool that initially comprises all of the output associated with the negative feedback, wherein the new rules extracted from the prediction model maximize one or more of: confidence of the feedback data being correctly predicted by the new rules as indicated by a confidence metric; and a number of correctly predicted negative feedbacks, as indicated by the feedback data, covered by the new rules, and wherein the new rules extracted from the prediction model minimize one or more of: complexity of the new rules; a total number of the new rules; and redundancy of the feedback data covered by the new rules.

At the computing device of the second aspect, the set of operations may further comprise: adjusting a simulation of the programmatic application based on the new rules as extracted; and using the input from the programmatic application as corresponding input to the simulation to determine whether outputs corresponding to the negative feedback are changed, using the simulation, to changed outputs or improved outputs. In some of these examples, the set of operations may further comprise: adjusting the programmatic application, based on the new rules, only when the outputs corresponding to the negative feedback are changed, using the simulation, to the changed outputs or the improved outputs. In others of these examples, the set of operations may further comprise: receiving confirmation data confirming that the outputs corresponding to the negative feedback are changed, using the simulation, to the changed outputs or the improved outputs; and adjusting, via the computing device, of the programmatic application based on the new rules only when the confirmation data is received.

At the computing device of the second aspect, the new rules may represent one or more of: changes to constraints of mathematical algorithms of the programmatic application; new constraints to the mathematical algorithms of the programmatic application; changes to existing code of the programmatic application; and new respective code of the programmatic application.

A third aspect of the present specification provides a non-transitory computer-readable storage medium having stored thereon program instructions that, when executed by at least one computing device, causes the at least one computing device to perform a method comprising: receiving: input and output from a programmatic application that refines given resource usage; and feedback data indicating feedback regarding the output from the programmatic application, the feedback data including negative feedback indicating a subset of the output that was changed or indicated as poor output; building a prediction model comprising an ensemble of decision trees using the input and the output; based on the feedback data, extracting, from the prediction model, new rules, which indicate instances of when the output is further refinable, the new rules covering at least a given portion of the output associated with negative feedback; and adjusting the programmatic application, based on the new rules.

At the non-transitory computer-readable storage medium of the third aspect, extracting the new rules from the prediction model may comprise: for each decision path in each decision tree of the prediction model, identifying, using the feedback data, respective numbers of respective outputs that were changed and not changed; and iteratively extracting the new rules from the prediction model, wherein, for each iteration: a respective new rule is extracted that comprises a portion of a decision tree that includes one decision path linked to a leaf node; and the output associated with the negative feedback, and covered by the respective new rule, is removed from a target pool that initially comprises all of the output associated with the negative feedback.

At the non-transitory computer-readable storage medium of the third aspect, the new rules extracted from the prediction model may maximize one or more of: confidence of the feedback data being correctly predicted by the new rules as indicated by a confidence metric; and a number of correctly predicted negative feedbacks, as indicated by the feedback data, covered by the new rules.

At the non-transitory computer-readable storage medium of the third aspect, the new rules extracted from the prediction model may minimize one or more of: complexity of the new rules; a total number of the new rules; and redundancy of the feedback data covered by the new rules.

At the non-transitory computer-readable storage medium of the third aspect, extracting the new rules from the prediction model may comprise: for each decision path in each decision tree of the prediction model, identifying, using the feedback data, respective numbers of respective outputs that were changed and not changed; and iteratively extracting the new rules from the prediction model, wherein, for each iteration: a respective new rule is extracted that comprises a portion of a decision tree that includes one decision path linked to a leaf node; and the output associated with the negative feedback, and covered by the respective new rule, is removed from a target pool that initially comprises all of the output associated with the negative feedback, wherein the new rules extracted from the prediction model maximize one or more of: confidence of the feedback data being correctly predicted by the new rules as indicated by a confidence metric; and a number of correctly predicted negative feedbacks, as indicated by the feedback data, covered by the new rules, and wherein the new rules extracted from the prediction model minimize one or more of: complexity of the new rules; a total number of the new rules; and redundancy of the feedback data covered by the new rules.

At the non-transitory computer-readable storage medium of the third aspect, the method may further comprise: adjusting a simulation of the programmatic application based on the new rules as extracted; and using the input from the programmatic application as corresponding input to the simulation to determine whether outputs corresponding to the negative feedback are changed, using the simulation, to changed outputs or improved outputs. In some these examples, method of the third aspect may further comprise: adjusting the programmatic application, based on the new rules, only when the outputs corresponding to the negative feedback are changed, using the simulation, to the changed outputs or the improved outputs. In others of these examples, method of the third aspect may further comprise: receiving confirmation data confirming that the outputs corresponding to the negative feedback are changed, using the simulation, to the changed outputs or the improved outputs; and adjusting, via the computing device, of the programmatic application based on the new rules only when the confirmation data is received.

At the non-transitory computer-readable storage medium of the third aspect, the new rules may represent one or more of: changes to constraints of mathematical algorithms of the programmatic application; new constraints to the mathematical algorithms of the programmatic application; changes to existing code of the programmatic application; and new respective code of the programmatic application.

### BRIEF DESCRIPTIONS OF THE DRAWINGS

For a better understanding of the various examples described herein and to show more clearly how they may be carried into effect, reference will now be made, by way of example only, to the accompanying drawings in which:
FIG. 1 depicts a system for adjusting operation of a programmatic application using an ensemble of decision trees, according to non-limiting examples.
FIG. 2 depicts a computing device for adjusting operation of a programmatic application using an ensemble of decision trees, according to non-limiting examples.
FIG. 3 depicts a method for adjusting operation of a programmatic application using an ensemble of decision trees, according to non-limiting examples.
FIG. 4 depicts the system of FIG. 1 implementing aspects of a method for adjusting operation of a programmatic application using an ensemble of decision trees, according to non-limiting examples.
FIG. 5A depicts an example of a decision tree, according to non-limiting examples.
FIG. 5B depicts another example of a decision tree, according to non-limiting examples.
FIG. 6 depicts an example of a decision tree that has higher depth then the decision trees of FIG. 5A and FIG. 5B, according to non-limiting examples.
FIG. 7 depicts the system of FIG. 1 implementing further aspects of a method for adjusting operation of a programmatic application using an ensemble of decision trees, according to non-limiting examples.
FIG. 8 depicts the system of FIG. 1 implementing further aspects of a method for adjusting operation of a programmatic application using an ensemble of decision trees, according to non-limiting examples.
FIG. 9 depicts the system of FIG. 1 implementing further aspects of a method for adjusting operation of a programmatic application using an ensemble of decision trees, according to non-limiting examples.
FIG. 10 depicts the system of FIG. 1 implementing further aspects of a method for adjusting operation of a programmatic application using an ensemble of decision trees, according to non-limiting examples.
FIG. 11 depicts examples of decision trees that may be used to generate new rules adjust a programmatic application, according to non-limiting examples.

### DETAILED DESCRIPTION

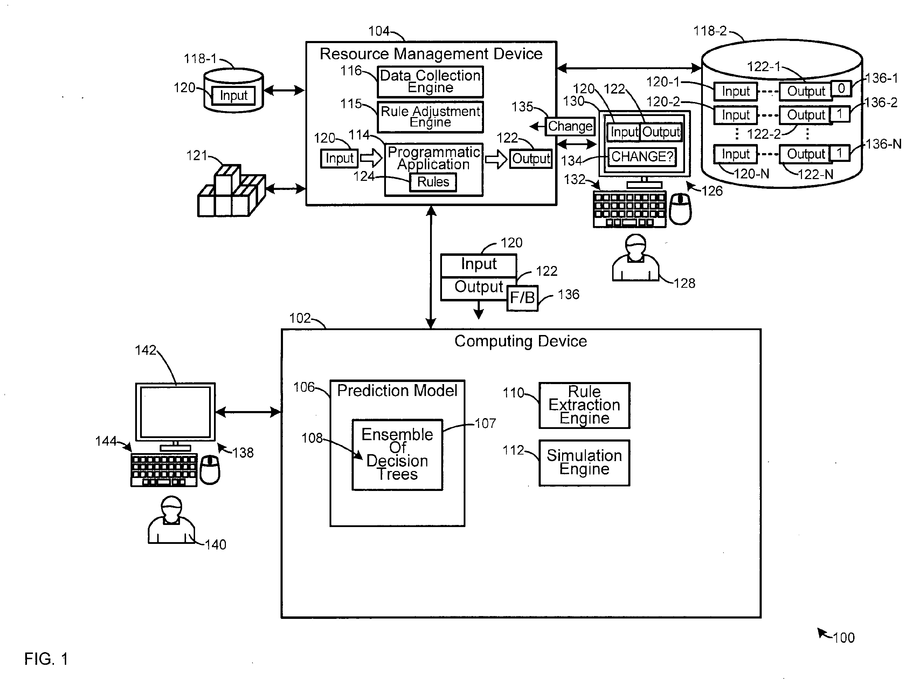

FIG. 1 depicts a system 100 for adjusting operation of a programmatic application using an ensemble of decision trees. The various components of the system 100 are in communication via any suitable combination of wired and/or wireless communication links, and communication links between components of the system 100 are depicted in FIG. 1, and throughout the present specification, as double-ended arrows between respective components. The communication links may include any suitable combination of wireless and/or wired links and/or wireless and/or wired communication networks, and the like.

The system 100 comprises a computing device 102 communicatively coupled to a resource management device 104.

The computing device 102 may comprise any suitable combination of one or more servers, one or more cloud computing devices, one or more personal computers, one or more laptops, and the like.

The resource management device 104 may comprise any suitable combination of one or more servers, one or more cloud computing devices, one or more personal computers, one or more laptops, and the like, however the resource management device 104 may be site specific, and/or associated with a particular entity managing certain resources, as described herein. In contrast, the computing device 102 may be providing software as a service and/or support for a plurality of resource management devices 104 (not depicted).

The computing device 102 is generally configured to implement a prediction model 106 comprising an ensemble 107 of decision trees 108, a rule extraction engine 110, and a simulation engine 112. The resource management device 104 generally implements a programmatic application 114, a rule adjustment engine 115, and a data collection engine 116. In some examples, the prediction model 106 and the programmatic application 114 may be implemented as respective engines.

For example, as used herein, the term "engine" refers to hardware (e.g., a processor, such as a central processing unit (CPU), graphics processing unit (GPU), an integrated circuit or other circuitry) or a combination of hardware and software (e.g., programming such as machine- or processor-executable instructions, commands, or code such as firmware, a device driver, programming, object code, etc. as stored on hardware). Hardware includes a hardware element with no software elements such as an application specific integrated circuit (ASIC), a Field Programmable Gate Array (FPGA), a PAL (programmable array logic), a PLA (programmable logic array), a PLD (programmable logic device), etc. A combination of hardware and software includes software hosted at hardware (e.g., a software module that is stored at a processor-readable memory such as random access memory (RAM), a hard-disk or solid-state drive, resistive memory, or optical media such as a digital versatile disc (DVD), and/or implemented or interpreted by a processor), or hardware and software hosted at hardware.

As depicted, the system 100 further comprises one or more memories 118-1, 118-2 (e.g., interchangeably referred to hereafter as the memories 118 and/or a memory 118, and/or a first memory 118-1 and a second memory 118-2) communicatively coupled with the resource management device 104. A memory 118 may, as depicted, be provided in the form a database. The memories 118 may be separate from the resource management device 104 (as depicted) and/or at least partially integrated into the resource management device 104. Furthermore, while two memories 118 are depicted for convenience, the system 100 may comprise as few as one memory 118 (e.g., storing the depicted components distributed amongst the memories 118-1, 118-2), or any suitable number of memories 118.

As depicted, the memory 118-1 stores input 120 that may be received at the resource management device 104 from any suitable source, such as one or more resource scheduling devices, one or more resource managing devices, one or more goods management devices, and the like, not depicted. In general, the input 120 comprises data defining items for which resources 121 may be provisioned. The input 120, for example, may indicate items and/or goods, and the like, to which resources 121 may be assigned to manage the items and/or goods, and the like defined by the input 120.

In one particular airport related example, the input 120 may indicate flights arriving at an airport, and may include data that indicates arrival times for such flights, as well as associated aircraft types of such flights, a size of associated aircrafts, and/or any other suitable data associated with arriving flights. In these examples, the input 120 may be received from one or more airline computing devices, and/or any other suitable combination of computing devices associated with one or more entities managing flights, and the input 120 may be stored at the first memory 118-1. In general, in this airport example, the programmatic application 114 may receive the input 120 and generate respective output 122 to refine and/or manage usage of the resources 121 to manage the flights indicated by the input 120. In a simple example, the output 122 may indicate a gate at the airport to which an arriving flight is to be directed; such output 122 may further indicate airport personnel that are to be assigned to assist with the arriving flight, a baggage carousel to which baggage from the arriving flight is to be transported, amongst other possibilities. Hence, in this example, the resources 121 may include, but is not limited to, the aforementioned gates, and airport personnel and/or any other suitable resources of an airport that may be used and/or refined and/or managed to service a flight indicated by the input 120, and/or any other suitable allocation of the resources 121. Put another way, the output 122 may assign and/or allocate resources 121 of an airport to a flight indicated by the input 120.

In another particular example, the input 120 may indicate goods arriving at a warehouse, and may indicate arrival times for such goods, as well as associated types of such goods, a size of such goods, and/or any other suitable data associated with arriving goods. In these warehouse example, the input 120 may be received from one or more goods management computing device, and/or any other suitable combination of one or more computing devices associated with one or more entities managing and/or shipping goods, and the input 120 may be stored at the first memory 118-1. In general, in this example, the programmatic application 114 may receive the input 120 and generate respective output 122 to refine and/or manage usage of the resources 121 to manage the goods indicated by the input 120. In a simple example, the output 122 may indicate a location at the warehouse to which arriving goods are to be directed; such output 122 may further indicate warehouse personnel that are to be assigned to assist with the arriving goods, amongst other possibilities. Hence, in this example, the resources 121 may include, but is not limited to, the aforementioned locations of a warehouse, and warehouse personnel and/or any other suitable resources of a warehouse that may be used and/or refined and/or managed to service goods indicated by the input 120, and/or any other suitable allocation of the resources 121. Put another way, the output 122 may assign and/or allocate resources 121 of a warehouse to goods indicated by the input 120.

Hence, in general, the programmatic application 114 may be generally refining given resource usage of the resources 121, and which may include, but is not limited to, assigning and/or using and/or allocating resources 121 to manage items, and/the like, indicated by the input 120, the refining of the given resource usage of the resources 121 provided by way of the output 122.

In general, the programmatic application 114 may rely on rules 124 for generating the output 122. As will next be explained, a type of such rules 124 may depend on a type of the programmatic application 114.

For example, the programmatic application 114 may comprise an optimizer-based and/or constraint-based application and/or algorithm that uses (e.g., non-machine learning) mathematical optimization algorithms to find the best output 122 to received input 120 based on defined constraints. Such programmatic constraints may be expressed and/or provided in any suitable format. In particular, in these examples, one input 120 may cause two or more outputs 122 to be generated by the programmatic application 114, but scores may be assigned to each output 122, with a higher score indicating a better output than a lower score; in these examples, the output 122 with the highest score may be selected as the output 122 corresponding to the input 120.

Hence, in this example, the rules 124 may comprise programmatic constraints and/or algorithms. Using an airport example, the rules 124 may comprise programmatic constraints and/or algorithms that ensure certain types of aircraft are assigned to certain gates, as some gates of an airport may be limited with respect to sizes of aircraft. Alternatively, or in addition, the rules 124 may comprise programmatic constraints and/or algorithms that prevent certain types of aircraft from being assigned to certain gates, as some gates of an airport may be limited with respect to sizes of aircrafts. Hence, the programmatic constraints and/or algorithms of the rules 124 may be defined positively or negatively, and/or in any suitable manner.

Alternatively, or in addition, the programmatic application 114 may comprise a rule-based application and/or algorithm that uses programmatic rules to interpret and process information. These rules may be in a form of if-then statements to find output 122 for received input 120 based on defined programmatic rules.

For example, the rules 124 may comprise programmatic rules, such as: "if input =X, then output=Y", where X may indicate a type an of item, such as an arriving aircraft type, and the like, as described above, and "Y" may indicate associated output, such as a gate of the resources 121 to which the aircraft type may be assigned.

Hence, while the term "rules" is used herein, it is understood that the rules 124 may comprise any suitable combination of the aforementioned programmatic constraints, and/or programmatic rules, and the like, depending on a type of the programmatic application 114.

Furthermore, the rules 124 may be provisioned at the resource management device 104 by an administrator of the resource management device 104, and/or heuristically, and/or in any suitable manner.

Nonetheless, such rules 124 may cause certain output 122 to be incorrect and/or not optimized (e.g., and/or rules 124 that may cause better refinement and/or management and/or usage of the resources 121 may not be present). Again continuuing with the airport example, a flight having a particular flight number may arrive at the airport every day, and the rules 124 may cause the associated aircraft to always be assigned to "Gate J" by the programmatic application 114. In a particular example, the input 120 may comprise "Flight #XYZ; Arrival Time=14:00; Aircraft type=747" and the associated output 122 may comprise "Gate J". However, in this example, the gate number may be consistently changed, as is next described.

For example, as depicted, the system 100 further comprises a terminal 126 communicatively coupled to the resource management device 104, and that may be operated by an operator 128. As depicted, the terminal 126 comprises a display screen 130 and one or more input devices 132 (e.g., as depicted a keyboard and/or a pointing device). As depicted, output 122 and associated input 120 may be provided and/or rendered at the display screen 130 along with an option 134 to change the output 122. For example, continuing with the airport example, the input 120 and associated output 122 may indicate that Flight #XYZ has been assigned to Gate J, however, Gate J may not be suitable for the flight for various reasons, such as airport personnel assigned to Gate J to manage Flight #XYZ may be scheduled to be at another gate just prior to the arrival of Flight #XYZ, and the other gate may be at a distance from Gate J that may not ensure that the airport personnel can be at Gate J in a timely manner to service the flight.

As such, the option 134 may comprise any suitable set of one or more electronic buttons, menu items, fields, and the like, for changing the gate number of Flight #XYZ, for example from Gate J to Gate D, as may be heuristically determined by the operator 128.

Hence, the operator 128 may interact with the input devices 132 and the option 134 to change the gate, and/or make any other suitable changes to the output 122, which causes change data 135 to be generated that indicates any such changes. As depicted, the terminal 126 provides the change data 135 to the resource management device 104. The change data 135 may generally indicate the change, and furthermore includes any such changes to the associated output 122, or the change data 135 causes new changed output to be generated. Regardless, the change data 135 explicitly indicates that given output 122 was changed.

However, in some examples, when no change data 135 is received for given output 122, the resource management device 104 may determine that the given output 122 is implicitly approved.

Alternatively, or in addition, the operator 128 may not change given output 122, but may nonetheless mark the given output 122 as poor output, for example using the input devices 132.

While not depicted, output 122 that is not changed, and output 122 that is changed, may be provided to one or more communication devices associated with implementing decisions on how to manage and/or refine the resources 121 in the form of combinations of input 120 and associated output 122 that has not changed, and/or combinations of input 120 and associated output 122 that has been changed.

Continuing with the airport example, given input 120 that includes a flight number, such as "Flight #XYZ", may be provided to such communication devices, along with associated output 122 that has changed, such as "GATE D". Such communication devices may be associated with airport personnel, such as air traffic controllers, that may communicate with communication devices on "Flight #XYZ", to instruct the pilot(s) of "Flight #XYZ" to land and proceed to "GATE D". Such input 120 and associated output 122 may further be used to instruct aircraft marshals or ramp agents that "Flight #XYZ" is to be guided to "GATE D". Such input 120 and associated output 122 may further be used to instruct baggage handlers to pick up luggage from "Flight #XYZ" at "GATE D" and bring the luggage to a particular baggage carousel (e.g., that may also be indicated by the associated output 122).

The data collection engine 116 may populate the memory 118-2 with input 120 and associated output 122, and further include feedback data 136 indicating whether or not output 122 was changed and/or is poor output 122 (e.g., as marked by the operator 128). For example, as depicted the memory 118-2 has been populated with "N" sets of pairs of input 120-1, 120-2...120-N and associated output 122-1, 122-2...122-N. Such associations are indicated via broken lines between associated input 120 and output 122.

Furthermore, the output 122 is marked with associated feedback data 136-1, 136-2...136-N (e.g., feedback data 136) indicating whether associated output 122 was changed or not changed. For example, as depicted, the feedback data 136 may have a value of "0" indicating associated output 122 was not changed, or a value of "1" indicating associated output 122 was changed. However, any suitable convention is within the scope of the present specification.

Furthermore, any particular set of output 122 stored at the second memory 118-2 is understood to comprise unchanged output 122. Hence, when output 122 is marked with associated feedback data 136 of "0", it is understood that the output 122 was not changed. As such, output 122 marked with associated feedback data 136 of "0" may indicate that the output 122 was "good" output data. As such, feedback data 136 having a value of "0" may comprise positive feedback and associated output 122 may be referred to as output 122 associated with positive feedback (even when implicitly approved).

However, when output 122 is marked with associated feedback data 136 of "1", it is understood that the output 122 was changed. As such, output 122 marked with associated feedback data 136 of "1" may indicate that the output 122 was "poor" and/or incorrect output, and led to increased use of processing resources in the system 100, for example at least by virtue of the change data 135 being generated and processed by the resource management device 104. As such, feedback data 136 having a value of "1" may comprise negative feedback and associated output 122 may be referred to as output 122 associated with negative feedback. As the rules 124 may not change, until as described herein, the same or similar input 120 (such as the Flight #XYZ arriving on a different day) will cause the programmatic application 114 to continue to generate the same or similar output 122 (e.g., on future days, the Flight #XYZ will again be assigned to Gate J), which may again cause the output 122 to be changed.

Furthermore, such change data 135 may lead to cascading changes to the output 122. In particular, and again continuuing with an airport example, when the gate number of Flight #XYZ is changed from Gate J to Gate D, via change data 135, other flights assigned to Gate D may need to be assigned to other gates, leading to yet more change data 135, more negative feedback data 136, and the programmatic application 114 continuuing to generate the same or similar output 122 (e.g., on future days, the Flight #XYZ will again be assigned to Gate J, and other flights will again have to be moved from Gate D to another gate), which may again cause the output 122 to be changed.

As this is clearly leads to a technical problem of wasting of processing resources at the system 100, as the resource management device 104 continues to generate poor output 122 that has a high probability of being changed, the resource management device 104 and/or the data collection engine 116 may provide a set of input 120 and associated output 122, with associated feedback data 136 (e.g., also indicated via "F/B" in FIG. 1) to the computing device 102 such that the computing device 102 may determine how to adjust the rules 124 to avoid output 122 that leads to negative feedback data 136, as described herein.

In some examples, input 120 and associated output 122, along with associated feedback data 136, as stored in the memory 118-2 may be provided periodically to the computing device 102, such as daily, weekly, monthly, amongst other possibilities. Alternatively, or in addition, input 120 and associated output 122, with associated feedback data 136 may be provided when "N" reaches a given number, such as "1000", "10,0000", "100,000", amongst other possibilities. Alternatively, or in addition, input 120 and associated output 122, along with associated feedback data 136, may be provided when a number of sets of the output 122 that were changed (e.g., as indicated by associated feedback data 136 having a value of "1") reaches a given number, such as "1000", "10,000", "100,000" amongst other possibilities.

Regardless, it is understood that the amount of input 120 and associated output 122, with associated feedback data 136, provided to the computing device 102 is large, which may be defined as at least 1000 pairs of input 120 and associated output 122 (with associated feedback data 136), or at least 10000 pairs of input 120 and associated output 122 (with associated feedback data 136), or at least 100,000 pairs of input 120 and associated output 122 (with associated feedback data 136), amongst other possibilities.

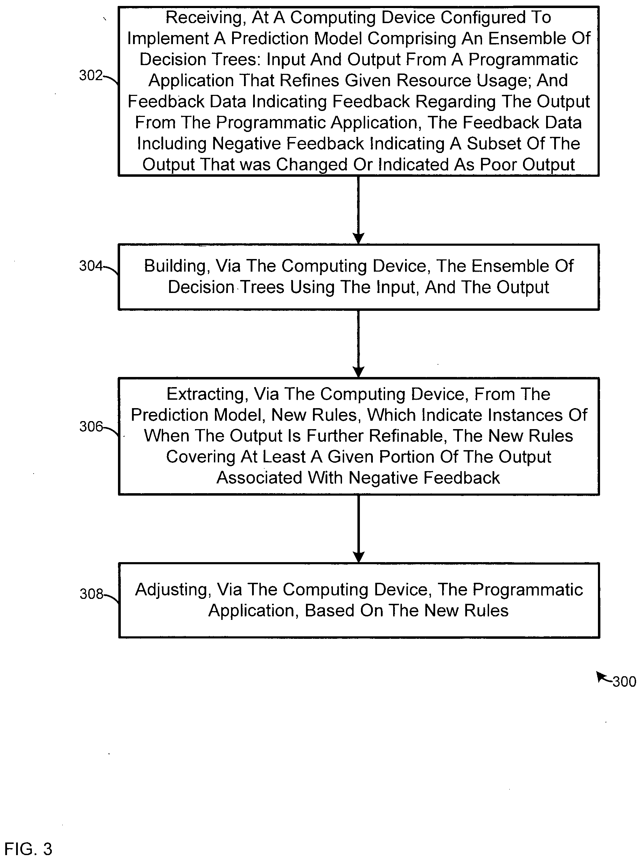

As will be described herein at least with respect to FIG. 3, the computing device 102 may build the ensemble 107 of decision trees 108 of the prediction model 106 using the input 120 and the output 122, as described herein. For example, such building may occur in any suitable manner, and may include, but is not limited to, using at least a first portion of the input 120 and the output 122 as training data (e.g., 80% of the input 120 and the output 122) and a second portion of the input 120 and the output 122 as test data (e.g., the remaining 20% of the input 120 and the output 122), however any suitable size of such portions of the input 120 and the output 122 may be respectively selected as training data and test data (e.g., 80%/20%, 70%/30%, amongst other possibilities, and the size of the training data is generally understood to be larger than a size of the test data). However, such splits between training data and test data may be different for different decision trees 108.

Put another way, a different first portions of pairs of the inputs 120 and the outputs 122, that are less than a total number of the pairs of inputs 120 and outputs 122 received from the resource management device 104, may be used as training data to build different decision trees 108, of the ensemble 107 of decision trees 108, with different remaining portions of the input 120 and the output 122 used as test data for the different decision trees 108.

Put another way, once a particular decision tree 108 is built (e.g., which may now be referred to as a trained decision tree 108), a remainder of the pairs of inputs 120 and outputs 122 that are not used as training data may be used as test data to test a trained decision tree 108. For example, a given input 120, of the remainder of the pairs of inputs 120 and outputs 122 that are not used as training data, may be input to a first node of the trained decision tree 108, to generate corresponding outputs of leaf nodes (e.g., terminal nodes) of the trained decision tree 108, to test the trained decision tree.

Furthermore, it is understood that the computing device 102 may generally build the decision trees 108 in any suitable manner, as described in more detail below.

For clarity, it is understood that the ensemble 107 of decision trees 108 (and/or the prediction model 106) may comprise a random forest machine learning algorithm, which may also be referred to as a random forest and/or a random decision forest, that generally operates by building a plurality of decision trees 108 in a training mode. Furthermore, it is understood that the term "decision tree" refers to one of the decision trees 108, the term "leaf node" refers to a terminal node of a decision tree 108 (which may have at least two leaf nodes and/or terminal nodes), and the term "decision path" refers to a path through a decision tree 108, from a first node to one leaf node, and includes any linked nodes therebetween. Hence, it is understood that a given decision path includes one leaf node.

A decision path of one of the trained decision tree 108 (e.g., one of the ensemble 107 of decision trees 108 that has been trained) that includes a first node, a leaf node, and any linked nodes therebetween, may be extracted, for example via the rule extraction engine 110, as a possible new rule that may be used to adjust the rules 124, which may include, but is not limited to, changing and/or modifying and/or superseding a rule 124. However, such decision paths that are considered as possible new rules may include respective leaf nodes having a "high number" and/or a highest number of outputs 122 that are associated with feedback data 136 of "1" (negative feedback), and with a confidence metric indicative of the feedback data 136 being correctly predicted at such respective leaf nodes, as described in more detail below.

It is furthermore understood that the ensemble 107 of decision trees 108 includes a plurality of decision trees 108 of different complexity (e.g., different depths of nodes and/or different numbers of layers of nodes and/or different maximum tree depths of nodes), and that the ensemble 107 of decision trees 108 may be built using different subsets of the inputs 120 and outputs 122. Indeed, a number of the decision trees 108 may be any suitable number, and may be on the order of 1000 decision trees 108, 10,000 decision trees 108, or higher, though any suitable number of decision trees 108 are within the scope of the present specification.

Furthermore, the input 120 and the output 122 associated with negative feedback data 136, received from the resource management device 104 may be placed in a target pool that initially comprises all the output 122 associated with negative feedback data 136, and may include associated input 120

Once a possible new rule is extracted, any output 122 associated with negative feedback data 136 that is covered by the new rule may be removed from the target pool. Extraction of new rules may continue, for example iteratively, until all the output 122 associated with negative feedback data 136 is removed from the target pool and/or until at least a threshold percentage, and the like, of the output 122 associated with negative feedback data 136 is removed from the threshold feedback pool. Such a threshold percentage may be 80%, 85%, 90%, amongst other possibilities.

In general, the rule extraction engine 110 may generally attempt to extract the new rules to maximize one or more of: a confidence of the feedback data 136 being correctly predicted by the new rules as indicated by a confidence metric; and a number of correctly predicted negative feedbacks (e.g., indicated by feedback data 136) covered by the new rules. Furthermore, the rule extraction engine 110 may generally attempt to extract the new rules to minimize one or more of: complexity of the new rules; a total number of the new rules; and redundancy of the feedback data 136 covered by the new rules.

In general, the rule extraction engine 110 attempts to extract, from the prediction model 106, new rules corresponding to conditions with which the operator 128 is not satisfied, so that corresponding output 122 associated with negative feedback data 136 may be avoided and/or obviated in the future. As such, a new rule may comprise a new constraint for an optimizer-based algorithm of the programmatic application 114, for example that adds a penalty to associated output 122 or suppresses an associated rule 124, or a new rule may comprise a new programmatic rule, and the like, for a rule-based algorithm of the programmatic application 114.

In some examples, the simulation engine 112 may be used to check if the new rules reduce the output 122 associated with the negative feedback data 136. For example, the simulation engine 112 may simulate the programmatic application 114 with the rules 124 adjusted according to the new rules, and enter the input 120 received from the resource management device 104 into the simulated programmatic application 114. The resulting output may be compared with the output 122 received from the resource management device 104. If at least a threshold amount (e.g., 50%, 60%, 70%, 80%, amongst other possibilities) of the resulting output indicates a reduction in the output 122 associated with negative feedback data 136, and/or is different from then the output 122 associated with negative feedback data 136, the new rules may be used to adjust the rules 124 of the programmatic application 114. For example, the new rules may be provided to the resource management device 104, which may adjust the rules 124 accordingly, for example via the rule adjustment engine 115.

As depicted, the computing device 102 may be optionally communicatively coupled to a terminal 138 operated by an operator 140, the terminal 138 comprising a display screen 142 and one or more input devices 144 (e.g., a keyboard and/or a pointing device) that may be used to confirm the new rules, prior to the new rules being provided to the resource management device 104.

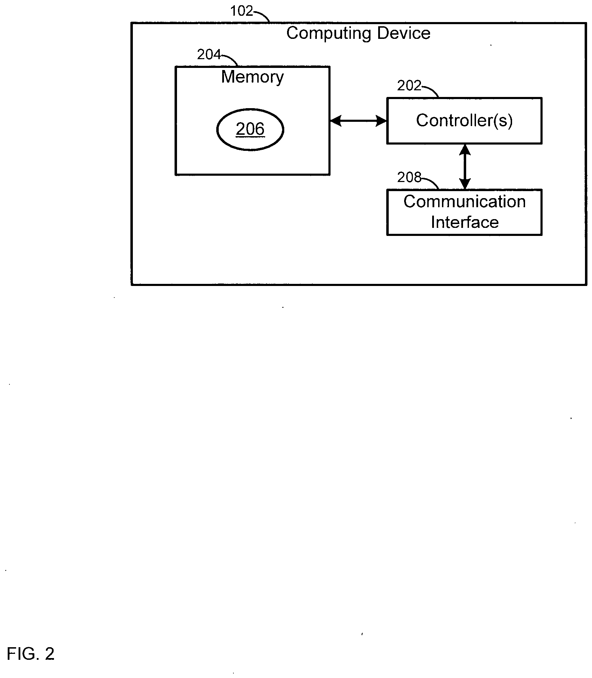

Turning to FIG. 2, before discussing the functionality of the system 100 in greater detail, certain components of the computing device 102 will be described. While depicted as one device, the computing device 102 may comprise one or more computing devices and/or one or more cloud computing devices that may be geographically distributed.

As shown in FIG. 2, the computing device 102 includes at least one controller 202, such as a central processing unit (CPU) or the like. The controller 202 is interconnected with a memory 204 storing an application 206, the memory 204 implemented as a suitable non-transitory computer-readable medium (e.g., a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The controller 202 and the memory 204 are generally comprised of one or more integrated circuits (ICs).

The controller 202 is also interconnected with a communication interface 208, which enables the computing device 102 to communicate with the other components of the system 100, though it is understood such communication may occur locally when components of the system 100 are combined. The communication interface 208 therefore may include any necessary components (e.g., network interface controllers (NICs), radio units, and the like) to communicate with components of the system 100. The specific components of the communication interface 208 may be selected based on upon a nature of one or more networks that the components of the system 100 use to communicate, and/or local communication between components of the system 100, and the like. The computing device 102 may also include input and output devices connected to the controller 202, such as keyboards, pointing devices, display screens, and the like and/or which may be exemplified by components of the terminal 138.

The components of the computing device 102 mentioned above may be deployed in a single enclosure, or in a distributed format. In some examples, therefore, the computing device 102 includes a plurality of processors, either sharing the memory 204 and communication interface 208, or each having distinct associated memories and communication interfaces. As such, it is understood that the memory 204, and/or a portion of the memory 204, may be internal (e.g., as depicted) or external to the computing device 102; regardless, the controller 202 is understood to have access to the memory 204. Furthermore, the memory 204 may at least partially comprise one or more of the memories 118, and/or store at least a portion of the input 120 and associated output 122, as well the associated feedback data 136.

Furthermore the application 206 may comprise computer-readable programming instructions, executable by the controller 202.

As will be understood by those skilled in the art, the controller 202 executes the instructions of the application 206 in order to perform a set of operations defined by the instructions contained therein including, but not limited to, the blocks of a method described with respect to FIG. 3. In the description below, the controller 202, and more generally the computing device 102, are understood to be configured to perform those actions. It will be understood that they are so configured via the execution (by the controller 202) of the instructions of the application stored in the memory 204. Put another way, the computing device 102 may comprise a computer-readable storage medium (e.g., a non-transitory computer-readable storage medium, such as the memory 204) having stored thereon program instructions that, when executed by the controller 202, causes the controller 202 to perform a set of operations comprising the blocks of the method described with respect to FIG. 3.

While structure of the resource management device 104 is not described in detail, the resource management device 104 may be understood to have a similar structure as the computing device 102, but adapted for respective functionality of the resource management device 104. For example, the resource management device 104 may comprise any suitable combination of input and output devices such as a display screen, a touch screen, a keyboard, a pointing device, and the like, for example as exemplified by components of the terminal 126. Furthermore, the memories 118 may be internal and/or external to the resource management device 104.

Attention is now directed to FIG. 3 which depicts a flowchart representative of a method 300 a method for adjusting operation of a programmatic application using an ensemble of decision trees. The operations of the method 300 of FIG. 3 correspond to machine readable instructions that are executed by the computing device 102, and specifically the controller 202 of the computing device 102. In the illustrated example, the instructions represented by the blocks of FIG. 3 are stored at the memory 204 for example, as the application 206. The method 300 of FIG. 3 is one way in which the system 100 and/or the computing device 102 may be configured. Furthermore, the following discussion of the method 300 of FIG. 3 will lead to a further understanding of the system 100, and its various components.

The method 300 of FIG. 3 need not be performed in the exact sequence as shown and likewise various blocks may be performed in parallel rather than in sequence. Accordingly, the elements of a method 300 are referred to herein as "blocks" rather than "steps." The method 300 of FIG. 3 may be implemented on variations of the system 100 of, as well.

At a block 302, the controller 202, and/or the computing device 102, receives: input 120 and output 122 from the programmatic application 114 that refines given resource usage; and feedback data 136 indicating feedback regarding the output 122 from the programmatic application 114, the feedback data 136 including negative feedback indicating a subset of the output 122 that was changed or indicated as poor output.

It is further understood that the feedback data 136 may further include explicit or implicit positive feedback indicating a respective subset of the output 122 that was not changed or not indicated as poor output. Indeed, implicit positive feedback may be indicated by the absence of an output 122 being labelled with negative feedback data 136, and it is understood that in such examples such output 122 corresponds to output 122 that was not changed or not indicated as poor output

At a block 304, the controller 202, and/or the computing device 102, builds the prediction model 106, comprising the ensemble 107 of decision trees 108, using the input 120, the output 122. It is further understood that the feedback data 136 may be used to build ensemble 107 of decision trees 108 as described herein. Put another way, at the block 304, the controller 202, and/or the computing device 102, builds the ensemble 107 of decision trees 108, using the input 120, the output 122.

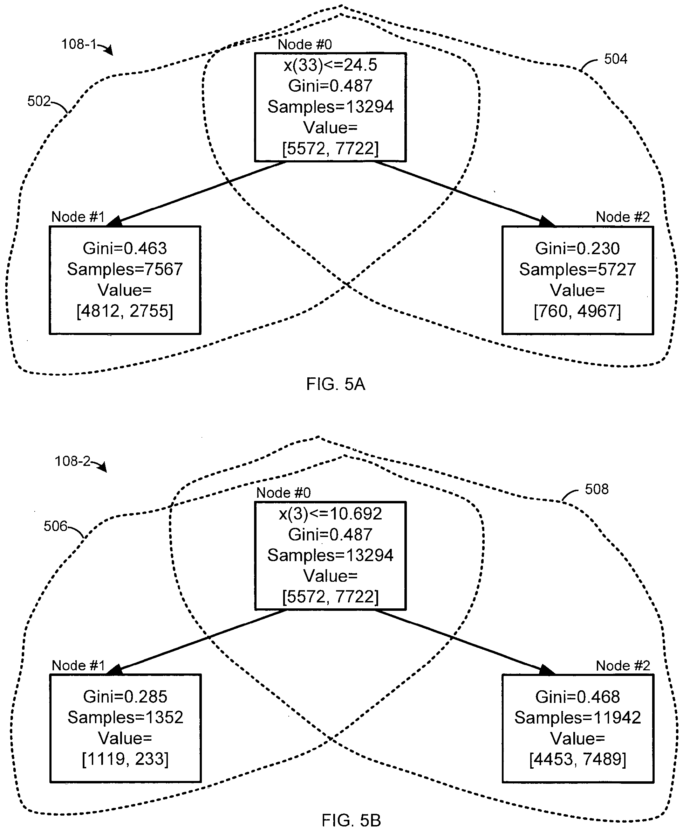

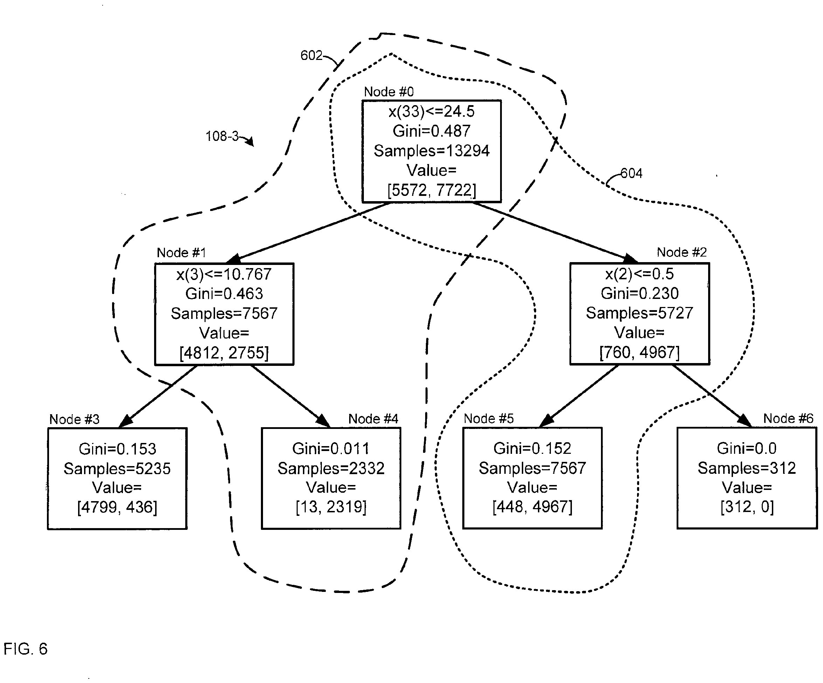

In general, a number of decision of trees 108 are built to vary complexity thereof (e.g., the different decision trees 108 have different depths of nodes, different tree depths, different maximum tree depths and the like, and are built using different training data and/or different training features (e.g., subsets of the pairs of the input 120 and output 122), and may be in the tens, hundreds, or thousands, and the like, of decision trees 108. Furthermore, as has been described herein, the different portions of the input 120 and the output 122 are used to build different decision trees 108, with respective remaining portions used to test the trained decision trees 108. Examples of a trained decision trees 108 are described herein with respect to FIG. 5A, FIG. 5B and FIG. 6.

At a block 306, the controller 202, and/or the computing device 102, extracts, from the prediction model 106 (e.g., the ensemble 107 of decision trees 108), new rules, which indicate instances of when the output 122 is further refinable, the new rules covering at least a given portion of the output associated with negative feedback data 136. Such extraction may occur via the rule extraction engine 110.

For example, for a given trained decision tree 108, the controller 202, and/or the computing device 102, may determine which output 122 corresponds to which leaf node of the given trained decision tree 108, and sort the output 122 (e.g., at least in the leaf nodes) into: output 122 associated with positive feedback data 136; and output 122 associated with negative feedback data 136. A confidence metric of the feedback data 136 being correctly predicted by at least the leaf nodes of a given trained decision tree 108 may also be determined. For example, the confidence metric may comprise a Gini coefficient indicating confidence that output 122 associated with negative feedback data 136 corresponding to a leaf node has been correctly predicted. In general, the Gini coefficient is related to entropy, and may be on a scale of 0 to 0.5 where 0 indicates a lowest entropy and/or good predictions, and 0.5 indicates a highest entropy and/or poor predictions. Put another way, lower Gini coefficient values indicate lower entropy and/or good predictions, and higher Gini coefficient value indicate larger entropy and/or poor predictions.

At a block 308, the controller 202, and/or the computing device 102, adjusts the programmatic application 114, based on the new rules. For example, the controller 202, and/or the computing device 102 may provide the new rules to the resource management device 104, which uses the new rules to adjust the rules 124 at least to reduce instances of output 122 associated with negative feedback data 136.

The method 300 may include other features.

For example, at the block 306, extracting the new rules from the prediction model may comprise the controller 202, and/or the computing device 102: for each decision path in each decision tree 108 of the prediction model 106, identifying, using the feedback data 136, respective numbers of respective outputs 122 that were changed and not changed; and iteratively extracting the new rules from the prediction model 106, wherein, for each iteration: a respective new rule is extracted that comprises a portion of a decision tree 108 that includes one decision path linked to a leaf node; and the output 122 associated with negative feedback data 136, and covered by the respective new rule, is removed from a target pool that initially comprises all of the output 122 associated with the negative feedback data 136. Such iterative extraction continues until at least a threshold amount of the output 122 associated with negative feedback data 136 is removed from the target pool

Furthermore, the new rules extracted from the prediction model 106 may maximize one or more of: a confidence of the feedback data 136 being correctly predicted by the new rules as indicated by a confidence metric; and a number of correctly predicted negative feedbacks (e.g., indicated by feedback data 136) covered by the new rules.

For example, for a new rule to be selected, the confidence metric of an associated leaf node may meet a threshold confidence condition. For example, using Gini coefficients, and a scale of 0 to 0.5, with "0" indicating highest confidence, and "0.5" indicating lowest confidence, such a threshold confidence condition may include a Gini coefficient being less than threshold coefficient, such as "0.3", "0.35", or "0.4", amongst other possibilities. Alternatively, or in addition, for a given decision tree 108, a decision path may be selected as a possible new rule when the decision path includes a leaf node having a lowest Gini coefficient (and/or a highest confidence) as compared to the other leaf nodes of other decision paths of the given decision tree 108.

Alternatively, or in addition, for a new rule to be selected, a number of outputs 122 associated with negative input, that are predicted by a decision path of a given decision tree 108, for example a leaf node of the given decision tree 108, may be above a threshold percentage, and the like, of the total number of outputs 122 associated with all the leaf nodes of the given decision tree 108. For example, such a threshold percentage may comprise 5%, 10%, 15%, amongst other possibilities.

Furthermore, the new rules extracted from the prediction model 106 may minimize one or more of: complexity of the new rules; a total number of the new rules; and redundancy of the feedback data 136 covered by the new rules.

Put another way, when two new rules correctly predict (e.g., according to the confidence metric) at least a portion of same given outputs 122 associated with negative feedback data 136, the new rules that is least complex may be selected (e.g., having a smaller number depth of nodes, and or the new rule selected includes fewer nodes than a new rule that is not selected).

Hence, in some examples, extracting the new rules from the prediction model 106 at the block 306 may comprise: for each decision path in each decision tree 108 of the prediction model 106, identifying, using the feedback data 136, respective numbers of respective outputs 122 that were changed and not changed; and iteratively extracting the new rules from the prediction model 106, where, for each iteration: a respective new rule is extracted that comprises a portion of a decision tree 108 that includes one decision path linked to a leaf node; and the output 122 associated with negative feedback data 136, and covered by the respective new rule, is removed from a target pool that initially comprises all of the output 122 associated with the negative feedback data 136; and the new rules extracted from the prediction model 106 maximize one or more of: confidence of the feedback data 136 being correctly predicted by the new rules as indicated by a confidence metric; and a number of correctly predicted negative feedbacks (e.g., indicated by feedback data 136) covered by the new rules; and the new rules extracted from the prediction model 106 minimize one or more of: complexity of the new rules; a total number of the new rules; and redundancy of the feedback data 136 covered by the new rules.

In some examples, the method 300 may further comprise the controller 202 and/or the computing device 102: adjusting a simulation of the programmatic application 114 based on the new rules as extracted; and using the input 120 from the programmatic application 114 as corresponding input to the simulation to determine whether the outputs 122 corresponding to the negative feedback data 136are changed, using the simulation, to changed outputs or improved outputs. Such a simulation may occur via the simulation engine 112.

For example, the resource management device 104 may provide changed output to the computing device 102, such that the computing device 102 has access not only to the output 122 associated with negative feedback data 136, but also associated changed output. Referring again to the aforementioned airport example, output 122 associated with negative feedback data 136, and associated changed output, may indicate that a gate for Flight #XYZ was changed from Gate J to Gate D. As such, when the simulation indicates that, for the input 120 indicating the arrival of Flight #XYZ, associated output 122 from the simulation indicates that Gate D is assigned to Flight #XYZ, such associated output 122 may comprise improved output.

In some of these examples, where a simulation occurs, at the block 308 the method 300 may further comprise, the controller 202 and/or the computing device 102, adjusting the programmatic application 114, based on the new rules, only when the outputs 122 corresponding to the negative feedback data 136are changed, using the simulation, to the changed outputs or the improved outputs.

In some of these examples, where a simulation occurs, at the block 308 the method 300 may further comprise, the controller 202 and/or the computing device 102, receiving confirmation data confirming that the outputs 122 corresponding to the negative feedback data 136 are changed, using the simulation, to the changed outputs or the improved outputs; and adjusting, via the computing device 102, of the programmatic application 114 based on the new rules only when the confirmation data is received.

For example, such confirmation data may be received from the terminal 138. In particular, results from the simulation may be rendered at the display screen 142, and the operator 140 may confirm the results via the input devices 144, thereby generating the aforementioned confirmation data.

In general, the new rules may represent one or more of: changes to constraints of mathematical algorithms of the programmatic application 114; new constraints to the mathematical algorithms of the programmatic application 114; changes to existing code of the programmatic application 114; and new respective code of the programmatic application 114. For example, such constraints and/or new constraints and/or existing code and/or new respective code may correspond to the rules 124 and/or new rules 124 and the like.

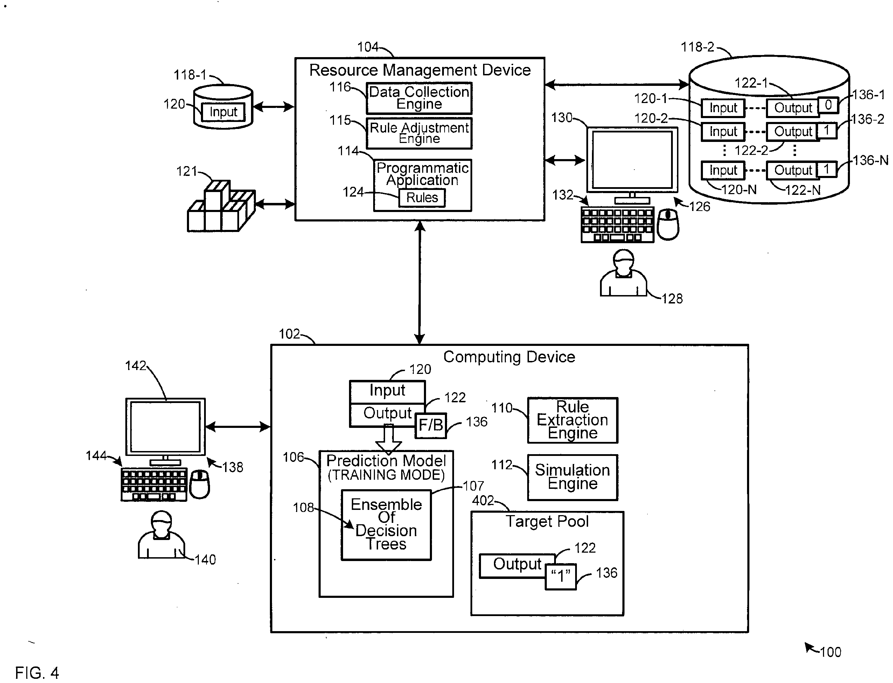

Attention is next directed to FIG. 4, FIG. 5A, FIG. 5B, FIG. 6, FIG. 7, FIG. 8, FIG. 9, FIG. 10, and FIG. 11, which depict examples of the method 300. FIG. 4, FIG. 7, FIG. 8, FIG. 9, and FIG. 10 are substantially similar to FIG. 1, with like components having like numbers.

Attention is next directed to FIG. 4, which is understood to follow from FIG. 1. In particular, FIG. 1 is an example of the computing device 102 receiving (e.g., at the block 302 of the method 300), the input 120, the output 122 and the feedback data 136, and FIG. 4 is an example of the computing device 102 building (e.g., at the block 304 of the method 300) the ensemble 107 of decision trees 108 using the input 120 and the output 122, as is next described. Also depicted in FIG. 4 is a target pool 402 at the computing device 102, the target pool 402 comprising outputs 122 associated with negative feedback (e.g., feedback data 136 having a value of "1"), as received from the resource management device 104; while not depicted, the target pool 402 may comprise associated inputs 120.

As depicted the input 120 and the output 122 received from the resource management device 104 are input to the prediction model 106, for example in a training and/or building mode. The feedback data 136 is also provided to the prediction model 106 in the training mode, and used to determine respective numbers of output 122 associated with positive feedback data 136 and negative feedback data 136 that are associated with each node of a decision tree 108, as is next described with respect to FIG. 5A, FIG. 5B, and FIG. 6, each of which depict different generic examples of trained decision trees 108.

In the examples of FIG. 5A, FIG. 5B, and FIG. 6, it is further understood that the combination of a pair of an input 120 and an output 122 may include various types of information associated with managing and/or refining the resources 121, and which may include both binary variables, categorical and/or discrete variables (e.g., variables having non-continuous possible values, such as a gate number, and the like), non-binary variables (e.g., which may be continuous or categorical), and continuous variables (e.g., such as times, which may not be discrete). For example, continuuing with the airport example, variables may include, but are not limited to, a list of available gates at the airport, and whether, or not, a gate is assigned to an associated flight. In some examples, a categorical variable may comprise a gate number to which an associated flight is assigned. Similarly, a binary variable may comprise whether or not a flight is assigned to a particular gate.

For example, when there are ten gates, a given output 122 may include a gate number, or a given output 122 may comprise a list of all the gates, with one gate associated with a term "YES" or "1" to indicate that the associated flight has been assigned to that gate, and the remainder of the gates associated with a term "NO" or "0", to indicate that the associated flight has not been assigned to remainder of the gates. Other types of variables in the example of an airport may include, but is not limited to a time that a flight is parked at a given gate (e.g., 1 hour, 1.5 hours, 2 hours, amongst other possibilities), for example beginning from an arrival time in associated input 120, an arrival time of a flight, a time period by which a flight is late, amongst other possibilities.

In the example decision trees 108 of FIG. 5A, FIG. 5B, and FIG. 6, an n^{th} such variable (e.g., out a total number of such variables) is generically referred to as "x(n)". Furthermore, FIG. 5A and FIG. 5B are examples of decision trees 108-1, 108-2 having a depth of two layers of nodes, and FIG. 6 is an example of a decision tree 108-3 having a depth of three layers of nodes. Hence, the decision tree 108 of FIG. 6 is understood to have higher complexity than the decision trees 108 of FIG. 5A, FIG. 5B, and/or the decision trees 108 of FIG. 5A, FIG. 5B are understood to have lower complexity than the decision tree 108 of FIG. 6.

Furthermore, at the example decision trees 108 of FIG. 5A, FIG. 5B, and FIG. 6, each node, other than leaf nodes, inherently include an if/then statement defining conditions of the node, a number of samples (e.g., a number of pairs of input 120 and output 122) used to both build/train and test a particular node of the decision trees 108. The nodes of the example decision trees further include a respective Gini coefficient indicating an entropy, and/or purity or impurity of data samples within each node and/or respective condition. However, such Gini coefficients are understood to be one example only of a confidence metric, and any other confidence metrics are within the scope of the present specification (e.g., that indicate entropy, and/or purity or impurity of data samples within each node and/or respective condition, accuracy, and the like), and which may include, but is not limited to, an entropy metric (e.g., on a scale of 0 to 1, where "0" indicates low entropy and "1" indicates high entropy, and the like. Indeed, any suitable proprietary metric may be used which indicates similar information.

Each node further comprises a "Value" indicator, where a first number of the value indicator indicates how many outputs 122 associated with positive feedback data 136 fall into the conditions of the node, and a second number of the value indicator indicates how many outputs 122 associated with negative feedback data 136 fall into the conditions of the node. It is further understood that outputs 122 used to train or test a decision tree 108 generally fall into one (e.g., and only one) of decision path of the decision tree 108, and each decision path is associated with a prediction of associated outputs 122 being associated with positive feedback data 136 or negative feedback data 136.

Furthermore, it is understood that the decision trees 108 of FIG. 5A, FIG. 5B, and FIG. 6 may be built with "13294" example outputs 122, and associated inputs 120, though different subsets (e.g., with respect to training data and test data) of the example outputs 122, and associated inputs 120 may be used to build, and test, the decision trees 108 of FIG. 5A, FIG. 5B, and FIG. 6. Of the "13294" example outputs 122, "5572" are associated with positive feedback data 136 and "7722" are associated with negative feedback data 136. Hence Node #0 of the decision trees 108 of FIG. 5A, FIG. 5B, and FIG. 6 all have a same number of samples and same value indicators. For the same reasons, the Gini coefficient of the Node #0 of the decision trees 108 of FIG. 5A, FIG. 5B, and FIG. 6 are also the same (e.g., 0.487).

In general, the decision trees 108 further include a logical structure. For example, each node, other than the leaf nodes, are connected to two arrows pointing to two nodes of a next layer of the nodes. As depicted, a left arrow points to a first node of a next layer, where outputs 122 of the previous node that did meet the conditions of the previous node are tested against respective conditions. Similarly, a right arrow points to a second node of a next layer where outputs 122 of the previous node that did not meet the conditions of the previous node are tested against respective conditions.

While leaf nodes are similar to as described above, the leaf nodes do not include a condition as leaf nodes are terminal nodes. Rather, leaf nodes include a number of the samples that met, or did not meet, the conditions of the previous node, using the same convention as described above (e.g., samples of a left leaf node met the conditions of the previous node, whereas samples of a right leaf node did not meet the conditions of the previous node).

Each leaf node in a decision tree 108 is further understood to be associated with the prediction of a label (either positive feedback data 136 or negative feedback data 136). The training/test data (e.g., the outputs 122) must follow one decision path and fall into the corresponding leaf node of a decision tree 108. A confidence metric of each leaf node may be determined using data samples data (e.g., the outputs 122) that fall into this leaf node. As has previously been described, such a confidence metric may include, but is not limited to, Gini coefficients, entropy metrics, accuracy metrics, and the like.

With attention next directed to the FIG. 5A, the input node of the decision tree 108-1, labelled as "Node #0" is associated with a condition of x(33)<=24.5, indicating that if output 122 that is received at the Node #0 has a variable x(33) having a value of less than or equal to a threshold of 24.5, then output 122 is provided to Node #1, and otherwise such output 122 is provided to Node #2. Hence, output 122 that meets the condition of x(33)<=24.5 is provided to Node #1, and output 122 that does not meet the condition of x(33)<=24.5 is provided to Node #2.

With attention still directed to Node #0, the Gini coefficient of 0.463 indicates relatively high entropy, and/or indicates a low confidence in a prediction of whether outputs 122 that fall into Node #0 belong to outputs 122 associated with positive feedback data 136 or negative feedback data 136. For example, of the "13294" outputs 122 (e.g., "Samples=132984"), the value indicators of [5572, 7722] indicate that "5572" were associated with positive feedback data 136, and "7722" were associated with negative feedback data 136. And the Gini coefficient of 0.463 indicates that such a prediction has relatively high entropy, and/or relatively low confidence.

Turning now to leaf Node #1, it is understood that "7567" of the sample outputs 122 of Node #0 met the condition of Node #0, and, looking at the value indicator, of those "7567" sample outputs 122, "4812" were associated with positive feedback data 136 and "2755" were associated with negative feedback data 136. The Gini coefficient of 0.463, however, indicates relatively high entropy and/or relatively low confidence for this prediction. As such, a decision path 502 comprising Node #0 and Node #1 may not be considered, by the rule extraction engine 110, to define conditions of a possible new rule that may be used to adjust the rules 124. Furthermore, as the Node #1 predicts more outputs 122 associated with positive feedback data 136 (e.g., "4812" samples) than outputs 122 associated with negative feedback data 136 (e.g., "2755" samples), alternatively, or in addition, the rule extraction engine 110 may not select the decision path 502 as a possible new rule, as it is understood that the rule extraction engine 110 may select decision paths for possible new rules based on accurate prediction of outputs 122 associated with negative feedback data 136 (e.g., and not accurate prediction of outputs 122 associated with positive feedback data 136).

Turning to leaf Node #2 of the decision path 108-1, it is understood that "5727" of the sample outputs 122 of Node #0 did not meet the condition of Node #0, and, looking at the value indicator, of those "5727" sample outputs 122, "760" were associated with positive feedback data 136 and "4967" were associated with negative feedback data 136. The Gini coefficient of 0.230, however, indicates relatively low entropy and/or relatively high confidence for this prediction. As such, a decision path 504 comprising Node #0 and Node #2 may be considered, by the rule extraction engine 110, to define conditions of a possible new rule that may be used to adjust the rules 124. Furthermore, as the Node #2 predicts more outputs 122 associated with negative feedback data 136 (e.g., "4967" samples) than outputs 122 associated with positive feedback data 136 (e.g., "760" samples), the rule extraction engine 110 may select the decision path 504 as a possible new rule, as it is understood that the rule extraction engine 110 may select decision paths for possible new rules based on accurate prediction of outputs 122 associated with negative feedback data 136 (e.g., and not accurate prediction of outputs 122 associated with positive feedback data 136).

Turning now to the decision tree 108-2 of FIG. 5B, a condition of Node #0 is based on a feature x(3) being less than or equal to 10.692, with number of samples, the value indicator and the Gini, coefficient being the same as the Node #0 of the decision tree 108-1 of FIG. 5A.

Turning to Node #1 the decision tree 108-2 of FIG. 5B, it is further understood that "1352" of the sample outputs 122 of Node #0 met the condition of Node #0, and, looking at the value indicator, of those "1352" sample outputs 122, "1119" were associated with positive feedback data 136 and "233" were associated with negative feedback data 136. As depicted, the Node #1 has a Gini coefficient of 0.285, which indicates relatively low entropy and/or a high confidence for this prediction, However, as Node #1 predicts more outputs 122 associated with positive feedback data 136 (e.g., "1119" samples) than outputs 122 associated with negative feedback data 136 (e.g., "233" samples), than the rule extraction engine 110 may not select the decision path 506 as a possible new rule, even though the Gini coefficient of "0.285" indicates relatively lower entropy and/or relatively high confidence for this prediction. Indeed, it is understood that the rule extraction engine 110 selects decision paths for possible new rules based on accurate prediction of outputs 122 associated with negative feedback data 136.

Turning to leaf Node #2 of the decision path 108-2, it is understood that "11942" of the sample outputs 122 of Node #0 did not meet the condition of Node #0, and, looking at the value indicator, of those "11942" sample outputs 122, "4453" were associated with positive feedback data 136 and "7489" were associated with negative feedback data 136. The Gini coefficient of 0.468, however, indicates relatively higher entropy and/or relatively love confidence for this prediction. As such, a decision path 506 comprising Node #0 and Node #2 may not be considered to define conditions of a possible new rule that may be used to adjust the rules 124. However, the Node #2 also predicts more outputs 122 associated with negative feedback data 136 (e.g., "7489" samples) than outputs 122 associated with negative feedback data 136 (e.g., "4453" samples), and hence the rule extraction engine 110 may select the decision path 502 as a possible new rule, as it is understood that the rule extraction engine 110 may select decision paths for possible new rules based on accurate prediction of outputs 122 associated with negative feedback data 136 (e.g., and not accurate prediction of outputs 122 associated with positive feedback data 136). Nonetheless such selection of decision paths may occur by comparing decision paths of the decision trees.

For example, if the rule extraction engine 110 were to exclude the decision path 502, 506 from consideration as possible new rules, due to the larger number of predicted outputs 122 associated with positive feedback data 136 than predicted outputs 122 associated with negative feedback data 136, the rule extraction engine 110 may compare possible new rules based on the decision paths 504, 508. For example, the rule extraction engine 110 would compare at least the Gini coefficients of the respective leaf nodes, and further compare the number of outputs 122 associated with negative feedback data 136 of the respective leaf nodes, for example to determine redundancy therebetween. In one example, the rule extraction engine 110 may select the decision path 504, over the decision path 508, as, firstly, the Gini coefficient of "0.230" of leaf Node #2 of the decision path 504 is lower than the Gini coefficient of "0.468" of leaf Node #2 of the decision path 504. The rule extraction engine 110 may further determine redundancy between decision paths 504, 508, and determine that at least a threshold amount (e.g., 60%) of the "4967" outputs 122 associated with negative feedback data 136 of the respective leaf node of the decision path 504 cover the "7489" outputs 122 associated with negative feedback data 136 of the respective leaf node of the decision path 508.

Attention is next directed to FIG. 6, which depicts yet another trained decision tree 108, however, in contrast to the decision trees 108-1, 108-2 of FIG. 5A and FIG. 5B, the decision tree 108-3 of FIG. 6 has higher complexity, due a depth of three layers of nodes, and hence includes four leaf nodes instead of the two leaf nodes of each of the decision trees 108-1, 108-2 of FIG. 5A and FIG. 5B. Furthermore, while the decision tree 108-3 of FIG. 6 has four decision paths (e.g., beginning at Node #0 and ending at a respective one of the four leaf Nodes #3, #4, #5, #6), only two decision paths 602, 604 are labelled, merely for simplicity.

Firstly, it is apparent that Node #3 and Node #6 predict more outputs 122 associated with positive feedback 136 (e.g., respectively "4799" and "312") than outputs 122 associated with negative feedback 136 (e.g., respectively "436" and "0"). Hence decision paths that include Node #3 and Node #6 may be ignored by the rule extraction engine 110, regardless of the low Gini coefficients of Node #3 and Node #6 (e.g., respectively "0.153" and "0.0").

Next considering the decision path 602, that includes Node #0, Node # 1, and Node #4, the decision path 602 may be considered by the rule extraction engine 110 to define conditions of a possible new rule that may be used to adjust the rules 124 due to the low Gini coefficient of "0.011" and as the leaf Node #4 predicts more outputs 122 associated with negative feedback 136 (e.g., "2319") than outputs 122 associated with positive feedback 136 (e.g., "13").

. Similarly, a decision path 604, that includes Node #0, Node #2, and Node #5, may be considered by the rule extraction engine 110 to define conditions of a possible new rule that may be used to adjust the rules 124 due to the low Gini coefficient of "0.152" and as the leaf Node #5 predicts more outputs 122 associated with negative feedback 136 (e.g., "4967") than outputs 122 associated with positive feedback 136 (e.g., "448").

It is understood that there may be no redundancy between the decision paths 602, 604, as respective outputs 122 associated with negative feedback data 136 are different for the respective leaf nodes of the decision paths 602, 604 (e.g., as the respective outputs 122 associated with negative feedback data 136 are sorted into different leaf nodes by the decision tree 108).

However, assuming the rule extraction engine 110 selects the decision paths 504, 602, 604 to define respective conditions of a possible new respective rule that may be used to adjust the rules 124, the rule extraction engine 110 may determine redundancy between the decision paths 504, 602, 604, and, when such redundancy occurs, may select one or two of the decision paths 504, 602, 604 as the basis for a respective new rules, depending on redundancy. For example, when the decision path 504 has a threshold amount of redundancy with each of the decision paths 602, 604, the rule extraction engine 110 may select the decision path 504, and discard the decision paths 602, 604. In another example, when the decision path 504 has a threshold amount of redundancy with only one of the decision paths 602, 604, the rule extraction engine 110 may select the decision path 504, and discard the decision path 602, 604 having redundancy with the decision path 504, and select the other decision path 602, 604 not having redundancy with the decision path 504.

While the decision trees 108 of FIG. 5A, FIG. 5B and FIG. 6 depict only two types of complexity, the decision trees 108, of the ensemble 107 of decision trees 108, may include more diversity in complexity. For example, the ensemble 107 of decision trees 108 may include decision trees 108 having a depth of two layers of nodes (e.g., as depicted in FIG. 5A and FIG. 5B), a depth of three layers of nodes (e.g., as depicted in FIG. 6), a depth of four layers of nodes, a depth of five layers of nodes, and higher, though as the rule extraction engine 110 is generally configured to minimize complexity of new rules used to adjust the rules 124, in some examples, the complexity of the decision trees 108 may be limited to a depth of five layers of nodes or fewer. However, a complexity of more than a depth of five layers of nodes is within the scope of the present specification.

Furthermore, it is understood that the computing device 102 may generally build the decision trees 108 in any suitable manner. For example, it is understood that the computing device 102 may boost the diversity of the ensemble of decision trees 108 by increasing the randomness in node splitting, using different feature subsets (e.g., different subsets of pairs of the input 120 and the output 122) for training different decision trees 108 and/or increasing the diversity of tree depths during model training. Alternatively, or in addition, the computing device 102 may be configured to build a sub-ensemble of decision trees 108 only up to a predefined tree depth at which nodes are no longer split (e.g., a depth of five layers of nodes). Indeed, any suitable random forest technique for building decision trees 108 is within the scope of the present specification, including, but not limited to, determination of conditions of nodes of the decision trees 108.

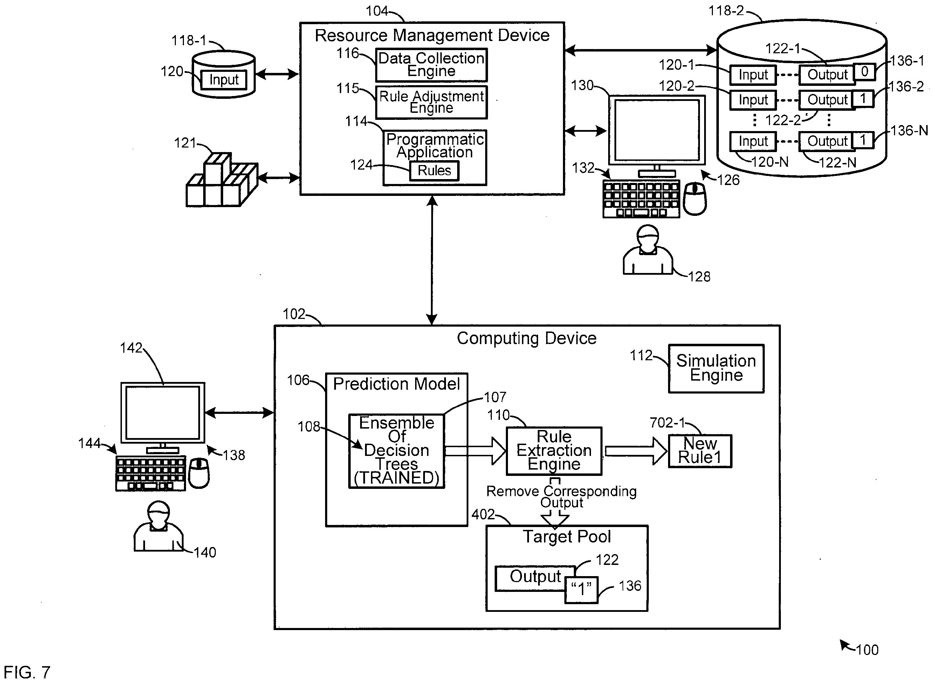

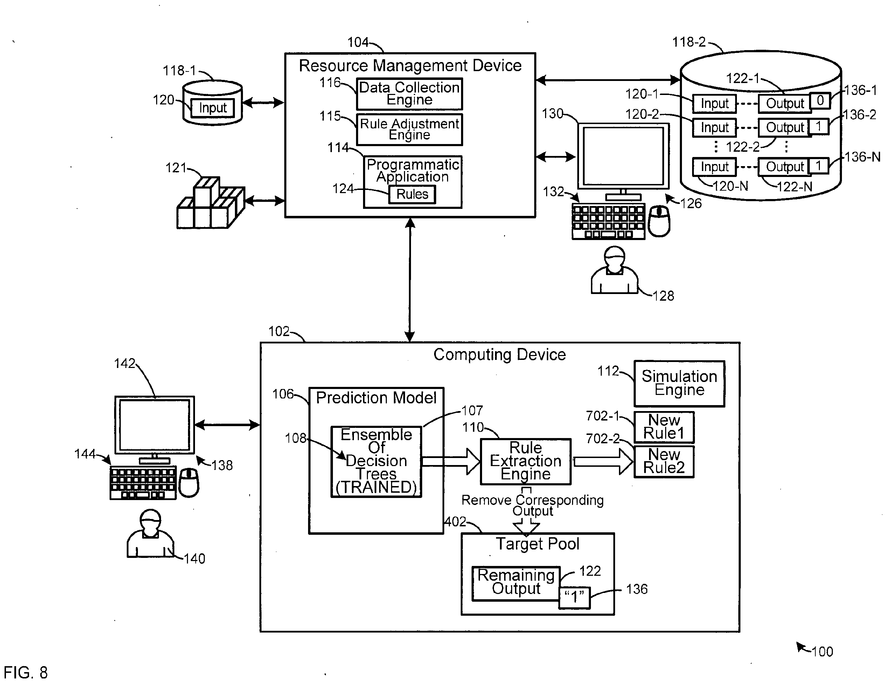

Attention is next directed to FIG. 7, and FIG. 8, which depict an example of the block 306 of the method 300.

With attention first directed to FIG. 7, the ensemble 107 of decision trees 108, as trained, are input to the rule extraction engine 110, which extracts a first new rule 702-1. For example, by for each decision path in each decision tree 108 of the ensemble 107 of decision trees 108, the rule extraction engine 110 identifies respective numbers of respective outputs 122 that were changed and not changed. In particular, the rule extraction engine 110 may process the value indicator of each leaf node for each decision path in each decision tree 108 to determine respective numbers of respective outputs 122 that were changed and not changed, as identified using the feedback data 136, as previously described.

Furthermore, the rule extraction engine 110 may extract the first new rule 702-1 by: processing the decision paths in each decision tree 108; and extracting the first new rule 702-1 by searching for a decision path that balances, from amongst the decision paths in each decision tree 108: a relatively high confidence (e.g., a relatively low Gini coefficient) of a leaf node; a relatively high number of outputs 122 associated with negative feedback data 136 of a leaf node; and a relatively low complexity (e.g., a relatively low depth) of the decision path. Such a trade-off and/or balance among different rule extraction criteria may be controlled by parameters provided by an administrator of the system 100 assign a preference to one or more of a relatively high confidence of a leaf node; a relatively high number of outputs 122 associated with negative feedback data 136 of a leaf node; and a relatively low complexity of the decision path.

Put another way, the rule extraction engine 110 may search the decision paths of each of the decision trees 108, starting with lowest depth decision paths, and search for a leaf node with a relatively high number of outputs 122 associated with negative feedback data 136 as indicated by the second number of the value indicators, and which also has a relatively low Gini coefficient (e.g., less than "0.29", less than "0.3", less than "0.31", amongst other possibilities (e.g., less than 0.3, less than 0.35, less than 0.4)). If no decision path is found that meets this criteria, the rule extraction engine 110 may search the next lowest depth decision paths for a decision path that meets this criteria.

Once a decision path is found that meets this criteria, the rule extraction engine 110 generates the first new rule 702-1 therefrom, that may correspond to a format of the rules 124, as previously described.

The rule extraction engine 110 furthermore removes, from the target pool 402, the specific output 122 associated with negative feedback data 136 that corresponds to the output 122 associated with negative feedback data 136 of the value indicator of the decision path used to generate the first new rule 702-1. Such removal is represented in FIG. 7 by a command "Remove Corresponding Output" provided by the rule extraction engine 110 to the target pool 402. Hence, it is understood that specific output 122 associated with negative feedback data 136of the value indicators of the decision paths of the decision trees 108 are tracked by the computing device 102 such that such removal from the target pool 402 may occur.

With attention now directed to FIG. 8, the target pool 402 is understood to include only remaining output 122. The remaining output 122 generally comprises the output 122 of the target pool 402 as depicted in FIG. 4 and FIG. 7, but with the specific output 122, associated with negative feedback data 136 that corresponds to the output 122 associated with negative feedback data 136 of the value indicator of the decision path used to generate the first new rule 702-1, removed.

FIG. 8 furthermore depicts the rule extraction engine 110 extracting a second new rule 702-2 from the ensemble 107 of decision trees 108. More specifically, the rule extraction engine 110 ignores the decision path used to generate the first new rule 702-1, and searches the remaining decision paths of each of the decision trees 108, to find a second decision path using the same criteria as described previously. However, when searching for leaf nodes with a relatively high number of outputs 122 associated with negative feedback data 136, the rule extraction engine 110 will searching for leaf nodes with a relatively high number of outputs 122 associated with negative feedback data 136 that are left in the target pool 402. In this manner, the rule extraction engine 110 further minimizes redundancy amongst the new rules 702-1, 702-2. However, it is understood that some of the outputs 122 associated with negative feedback data 136 of the leaf node of a second selected decision path may not be present in the target pool 402, for example due to having been removed during extraction of the first new rule 702-1.

As also depicted in FIG. 8, the rule extraction engine 110 furthermore removes, from the target pool 402, the specific output 122 associated with negative feedback data 136 that corresponds to the output 122 associated with negative feedback data 136 of the value indicator of the decision path used to generate the second new rule 702-2.

Hereafter the new rules 702-1, 702-1 are interchangeably referred to, collectively, as the new rules 702, and, generically, as a new rule 702. Furthermore, while extraction of only two new rules 702 is depicted, any suitable number of new rules 702 may be extracted iteratively, as described with respect to the rules 702-1, 702-2.

In particular, such extraction of new rules 702, and removal of corresponding output 122 associated with negative feedback data 136 from the target pool 402, may occur iteratively until all the output 122 is removed from the target pool 402, and/or until a threshold amount of the output 122 is removed from the target pool 402 and/or or until a given number of new rules 702 are extracted.

Furthermore, while present examples are described with respect to removal of output 122 from the target pool 402, in other examples the target pool 402 may be optional and the computing device 102 may track coverage of output 122 associated with negative feedback data 136 by the new rules 702 in any suitable manner (e.g., using a database approach in which output 122 associated with negative feedback data 136 is marked as covered, or not covered, by a new rule 702 when a new rule 702 is extracted).

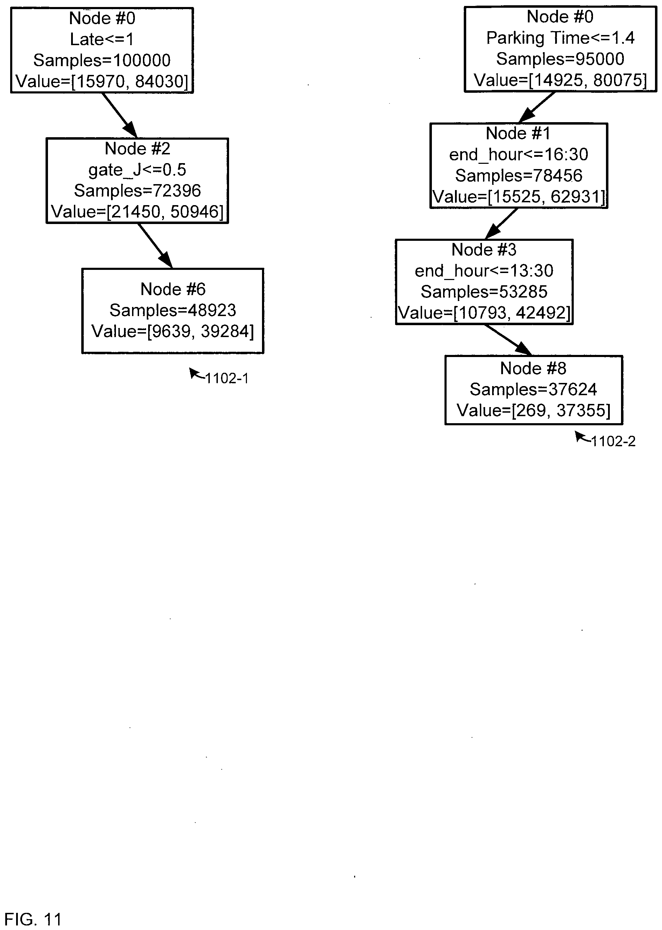

However, it is understood that in extracting the new rules 702, the rule extraction engine 110 furthermore attempts to minimize a number of the new rules 702 while maximizing the output 122 associated with negative feedback data 136 covered by the new rules 702. Put another way, the rule extraction engine 110 attempts to find a smallest number of the new rules 702 that cover the largest amount of the output 122 associated with negative feedback data 136. Explicit examples of decision paths that may be used for new rules 702 in the airport example are described herein with respect to FIG. 11.

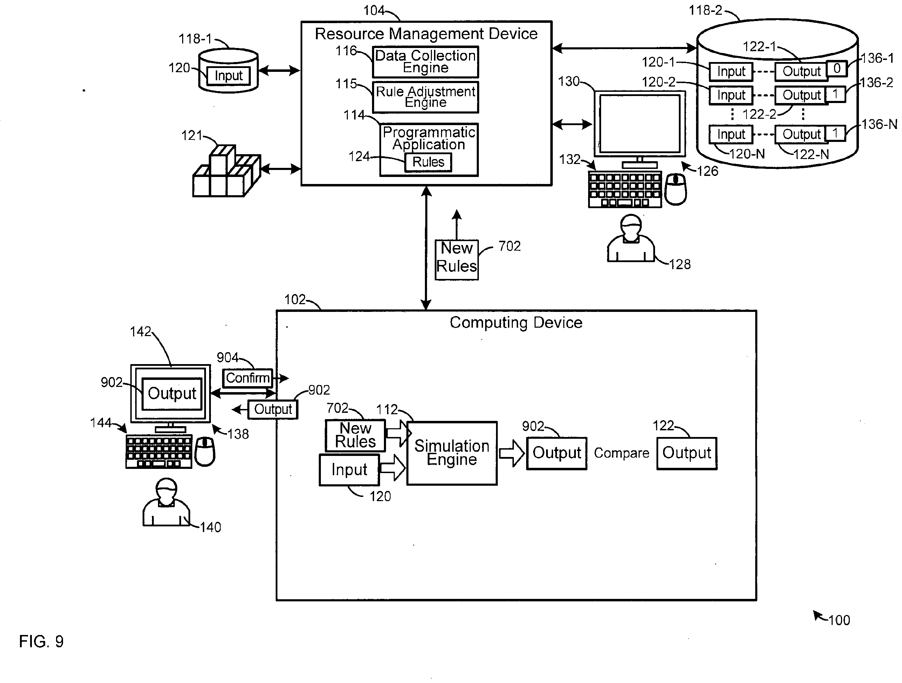

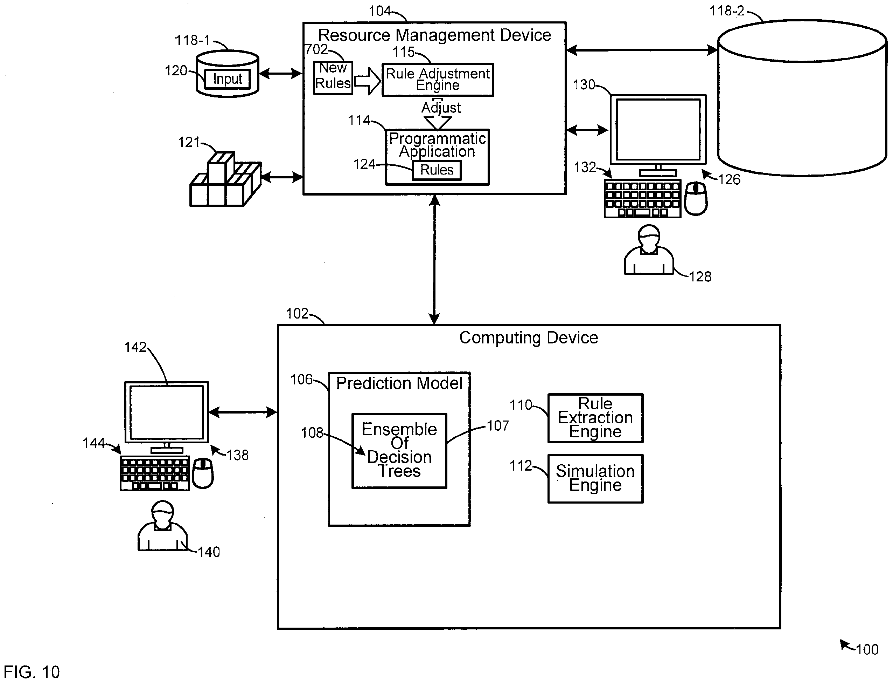

However, first attention is directed to FIG. 9 and FIG. 10, which depict an example of the block 308 of the method 300, as well as some optional features. While for simplicity, not all features of the system 100 are depicted in FIG. 9 and FIG. 10, they are nonetheless understood to be present.

For example, as depicted, the computing device 102 may use the new rules 702 to adjust the simulation engine 112 (e.g., a simulation of the programmatic application 114). In general, such adjustment attempts to simulate how the programmatic application 114 might behave when the new rules 702 are used to adjust the rules 124.

As depicted, and after the simulation engine 112 is adjusted, the computing device 102 may provide the input 120 received from the resource management device 104 to the simulation engine 112, which generates associated output 902. The output 902 may be compared, by the computing device 102, with the output 122 received from the resource management device 104 to determine whether the input 120 that resulted in output 122 associated with negative feedback data 136 now causes the simulation engine 112 to generate different output 902. When a threshold amount (e.g., 50%, 60%, 70%, and the like) of the different output 902 differs from the output 122 associated with negative feedback data 136, the new rules 702 may be used to adjust the rules 124.

While not depicted, the computing device 102 may further receive, from the resource management device 104, the changed output as described above, and compare the output 902 with such changed output, to whether the input 120 that resulted in output 122 associated with negative feedback data 136 now causes the simulation engine 112 to generate different output 902 that corresponds to the changed output. When a threshold amount (e.g., 50%, 60%, 70%, and the like) of the different output 902 corresponds to the changed output, the new rules 702 may be used to adjust the rules 124.

Put another way, the input 120 from the programmatic application 114 may be used as corresponding input to a simulation of the programmatic application 114 to determine whether the outputs 122 corresponding to the negative feedback data 136 are changed, using the simulation, to changed outputs 902 or improved outputs 902. For example, improved outputs 902 may comprise outputs 902 that corresponds to the changed output described above.

Put yet another way, adjusting the programmatic application 114, based on the new rules 702, may occur only when the outputs 122 corresponding to the negative feedback data 136 are changed, using the simulation, to the changed outputs 902 or the improved outputs 902, and such a determination may be threshold based, as described above. For example, adjusting the programmatic application 114, based on the new rules 702, may occur only when the outputs 122 corresponding to the negative feedback data 136 are changed, using the simulation, to a threshold percentage of the changed outputs 902 or the improved outputs 902.

As also depicted in FIG. 9, the output 902 may be optionally provided to the terminal 138 and rendered at the display screen 142, for review by the operator 140. While not depicted, the corresponding input 120 and the corresponding output 122 may also be provided to the terminal 138 and rendered at the display screen 142, for review by the operator 140. The operator 140 may review the output 902, the corresponding input 120 and the corresponding output 122 and operate the input devices 144 to confirm the output 902. Such review of the output 902 is understood to comprise an implicit review of the new rules 702, and/or a confirmation of the output 902 is understood to comprise an implicit confirmation of the new rules 702. Alternatively, or in addition, the new rules 702 may be provided to the terminal 138, reviewed and confirmed. Regardless, a confirmation at the terminal 138 may cause confirmation data 904 to be provided to the computing device 102.

Put another way, in the examples, the computing device 102 may receive the confirmation data 904 confirming that the outputs 122 corresponding to the negative feedback data 136 are changed, using the simulation, to the changed outputs 902 or the improved outputs 902. Furthermore, in some of these examples, adjustment of the programmatic application 114, based on the new rules 702, may occur only when the confirmation data 904 is received.

However, it is understood that the simulation and/or the confirmation described with respect to FIG. 9 may be optional.

As also depicted in FIG. 9, the computing device 102 may adjust the programmatic application 114, based on the new rules 702, by providing the new rules 702 to the resource management device 104, which may trigger the rule adjustment engine 115 of the resource management device 104 to implement adjusting of the programmatic application 114 based on the new rules 702, as is next described with respect to FIG. 10.

In particular, FIG. 10 depicts the new rules 702 being input to the rule adjustment engine 115 which responsively adjusts the rules 124 of the programmatic application 114. Thereafter, the programmatic application 114 may generally produce fewer outputs 122 associated with negative feedback.

As also depicted in FIG. 10, the input 120, the output 122 and the feedback data 136 used to generate the new rules 702 may be deleted from the second memory 118-2, though new input 120, new output 122 and new feedback data 136 may continue to be collected. Indeed, while upon adjustment of the programmatic application 114 using the new rules 702, the programmatic application 114 may generally produce fewer outputs 122 associated with negative feedback data 136, changes in the resources 121 (e.g., closing or opening of gates, changes in personnel, and the like), and/or new input 120 and/or new types of input 120, may cause the programmatic application 114 to increase generation of outputs 122 associated with negative feedback data 136. Hence, the method 300 may be repeated periodically, and the like to continue to improve efficiency of operation of the resource management device 104.

Attention is next directed to FIG. 11, which depicts two example decision paths 1102-1, 1102-2 (the decision paths 1102 and/or a decision path 1102) that may be extracted, by the rule extraction engine 110 from the ensemble 107 of decision trees 108 for the airport example described herein, and used to generate the new rules 702. While Gini coefficients are not depicted, they may nonetheless be present.

With attention first directed to the decision path 1102-1, the variable "Late" of Node #0 refers to a time period by which a flight is late, and the condition of "Late<=1" refers to a flight being late by less than or equal to 1 hour; in these examples, values of "100,000" outputs 122 associated with the Node #0 may be less than or equal to, or greater than, 1 hour, and have been sorted accordingly into "15970" outputs 122 associated with positive feedback 136 and "84030" outputs 122 associated with negative feedback 136. It is furthermore understood that "72936" outputs 122 of the samples of Node #0 are associated with flights that are late by more than one hour (e.g., did not meet the associated condition of "Late<=1", as indicated by the arrow between Node #0 and Node #1 being to the right), and are provided to Node #2 of the decision path 1102-1, which indicates 72936 samples.

Furthermore, the variable "gate_J" of Node #2 refers to a flight being assigned or not assigned to Gate J, with a value of "gate_J" being 0, when a flight is not assigned to Gate J, or 1, when a flight is assigned to Gate J, which may be compared to the condition of "gate_J<=0.5" (e.g., the variable "gate_J" may be binary). Furthermore, of the "72936" outputs 122 that are received at the Node #2 from the Node #0, "21450" are associated with positive feedback data 136, and "50946" are associated with negative feedback data 136.

It is furthermore understood that "48923" outputs 122 of the samples of Node #2 are associated with flights that are assigned to gate J (e.g., did not meet the associated condition of" gate_J<=0.5", as indicated by the arrow between Node #2 and Node #6 being to the right), and are provided to leaf Node #6 of the decision path 1102-1, which indicates "48923" samples. Of the "48923" outputs 122 of the leaf Node #6, "9639" are associated with positive feedback data 136, and "39284" are associated with negative feedback data 136

Put another way, as the arrow from Node #0 to Node #1 is to the right, it is understood that Node #1 occurs when "Late" is greater than 1 hour, and, similarly, as the arrow from Node #2 to Node #6 is to the right, it is understood that Node #6 occurs when "gate_J" is >0.5 and/or when a flight is assigned to Gate J.

Hence, in this example, the decision path 1102-1 indicates that the operator 128 changes a gate of flight almost every time, when an output 122 indicates that flight is late by more than one hour and the flight is assigned to Gate J. Hence, a corresponding new rule 702 may cause the programmatic application 114 to suppress outputs 122 where flights are late by more than one hour and assigned to Gate J.

With attention next directed to the decision path 1102-2, the variable "Parking Time" of Node #0 may comprise a time period that a flight is parked at a gate, and the condition of Node #0 of "Parking Time<=1.4" is used to determine whether the variable "Parking Time", of an associated output 122, is less than or equal to 1.4 hours, or greater than 1.4 hours.

Furthermore, the variable "end_hour" of Node #1 and Node #2 refers to a time of day that a parking time may end. Furthermore the logical structure of the decision path 1102-2 indicates that, for parking times of less than 1.4 hours (e.g., the condition of the Node #0), and for an end time prior, or equal, to 16:30 (e.g., the threshold condition of Node #1, as well as the right hand direction of the arrow from Node #1 to Node #3), but after 13:30 (e.g., the threshold condition of Node #3, as well as the left hand direction of the arrow from Node #3 to Node #8), the operator 128 changes some aspect of the resources 121 (e.g., a gate, a parking time, an end hour) almost every time. Hence, a corresponding new rule 702 may cause the programmatic application 114 to suppress outputs 122 having parking times of less than 1.4 hours that have end times between 13:30 and 16:30, and/or a corresponding new rule 702 may cause the programmatic application 114 to use parking time of greater than 1.4 hours so that the conditions of the decision path 1102-2 are not met.

As should by now be apparent, the operations and functions of the devices described herein are sufficiently complex as to require their implementation on a computer system, and cannot be performed, as a practical matter, in the human mind. In particular, computing devices, and the lie, such as set forth herein are understood as requiring and providing speed and accuracy and complexity management that are not obtainable by human mental steps, in addition to the inherently digital nature of such operations (e.g., a human mind cannot interface directly with, RAM or other digital storage, cannot transmit or receive electronic messages, cannot build an ensemble of decision trees, amongst other features and functions set forth herein).

It is further understood that instance of the term "configured to", such as "a computing device configured to...", "a processor configured to...", "a controller configured to...", and the like, may be understood to include a feature of a computer-readable storage medium having stored thereon program instructions that, when executed by a computing device and/or a processor and/or a controller, and the like, may cause the computing device and/or the processor and/or the controller to perform a set of operations which may comprise the features that the computing device and/or the processor and/or the controller, and the like, are configured to implement. Hence, the term "configured to" is understood not to be unduly limiting to means plus function interpretations, and the like.

Furthermore, descriptions of one processor and/or controller and/or device and/or engine, and the like, configured to perform certain functionality is understood to include, but is not limited to, more than one processor and/or more than one controller and/or more than one device and/or more than one engine, and the like performing such functionality.

It is understood that for the purpose of this specification, language of "at least one of X, Y, and Z" and "one or more of X, Y and Z" may be construed as X only, Y only, Z only, or any combination of two or more items X, Y, and Z (e.g., XYZ, XY, YZ, XZ, and the like). Similar logic may be applied for two or more items in any occurrence of "at least one..." and "one or more..." language.

The terms "about", "substantially", "essentially", "approximately", and the like, are defined as being "close to", for example as understood by persons of skill in the art. In some examples, the terms are understood to be "within 10%," in other examples, "within 5%", in yet further examples, "within 1%", and in yet further examples "within 0.5%".

Persons skilled in the art will appreciate that in some examples, the functionality of devices and/or methods and/or processes described herein may be implemented using pre-programmed hardware or firmware elements (e.g., application specific integrated circuits (ASICs), electrically erasable programmable read-only memories (EEPROMs), etc.), or other related components. In other examples, the functionality of the devices and/or methods and/or processes described herein may be achieved using a computing apparatus that has access to a code memory (not shown), which stores computer-readable program code for operation of the computing apparatus. The computer-readable program code could be stored on a computer readable storage medium, which is fixed, tangible and readable directly by these components, (e.g., removable diskette, CD-ROM, ROM, fixed disk, USB drive). Furthermore, it is appreciated that the computer-readable program may be stored as a computer program product comprising a computer usable medium. Further, a persistent storage device may comprise the computer readable program code. It is yet further appreciated that the computer-readable program code and/or computer usable medium may comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium may be either a non-mobile medium (e.g., optical and/or digital and/or analog communications lines) or a mobile medium (e.g., microwave, infrared, free-space optical or other transmission schemes) or a combination thereof.

Persons skilled in the art will appreciate that there are yet more alternative examples and modifications possible, and that the above examples are only illustrations of one or more examples. The scope, therefore, is only to be limited by the claims appended hereto.

## Claims

1. A method (300) comprising:
receiving (302), at a computing device (102): input (120) and output (122) from a programmatic application (114) that refines given resource usage; and feedback data (136) indicating feedback regarding the output (122) from the programmatic application (114), the feedback data (136) including negative feedback indicating a subset of the output (122) that was changed or indicated as poor output (122);
building (304), via the computing device (102), a prediction model (106), comprising an ensemble (107) of decision trees (108), using the input (120) and the output (122);
based on the feedback data (136), extracting (306), via the computing device (102), from the prediction model (106), new rules (124), which indicate instances of when the output (122) is further refinable, the new rules (702) covering at least a given portion of the output (122) associated with negative feedback; and
adjusting (308), via the computing device (102), the programmatic application (114), based on the new rules (124).

2. The method (300) of claim 1, wherein extracting the new rules (702) from the prediction model (106) comprises:
for each decision path in each decision tree of the prediction model (106), identifying, using the feedback data (136), respective numbers of respective outputs (122) that were changed and not changed; and
iteratively extracting the new rules (702) from the prediction model (106), wherein, for each iteration: a respective new rule (702) is extracted that comprises a portion of a decision tree that includes one decision path linked to a leaf node; and the output (122) associated with the negative feedback, and covered by the respective new rule, is removed from a target pool that initially comprises all of the output (122) associated with the negative feedback.

3. The method (300) of claim 1, wherein the new rules (702) extracted from the prediction model (106) maximize one or more of: confidence of the feedback data (136) being correctly predicted by the new rules (702) as indicated by a confidence metric; and a number of correctly predicted negative feedbacks, as indicated by the feedback data (136), covered by the new rules (124).

4. The method (300) of claim 1, wherein the new rules (702) extracted from the prediction model (106) minimize one or more of: complexity of the new rules (124); a total number of the new rules (124); and redundancy of the feedback data (136) covered by the new rules (124).

5. The method (300) of claim 1, wherein extracting the new rules (702) from the prediction model (106) comprises:
for each decision path in each decision tree of the prediction model (106), identifying, using the feedback data (136), respective numbers of respective outputs (122) that were changed and not changed; and
iteratively extracting the new rules (702) from the prediction model (106), wherein, for each iteration: a respective new rule (702) is extracted that comprises a portion of a decision tree that includes one decision path linked to a leaf node; and the output (122) associated with the negative feedback, and covered by the respective new rule, is removed from a target pool that initially comprises all of the output (122) associated with the negative feedback,
wherein the new rules (702) extracted from the prediction model (106) maximize one or more of: confidence of the feedback data (136) being correctly predicted by the new rules (702) as indicated by a confidence metric; and a number of correctly predicted negative feedbacks, as indicated by the feedback data (136), covered by the new rules (124), and
wherein the new rules (702) extracted from the prediction model (106) minimize one or more of: complexity of the new rules (124); a total number of the new rules (124); and redundancy of the feedback data (136) covered by the new rules (124).

6. The method (300) of claim 1, further comprising:
adjusting a simulation of the programmatic application (114) based on the new rules (702) as extracted; and
using the input (120) from the programmatic application (114) as corresponding input (120) to the simulation to determine whether outputs (122) corresponding to the negative feedback are changed, using the simulation, to changed outputs (122) or improved outputs (122).

7. The method (300) of claim 6, further comprising:
adjusting the programmatic application (114), based on the new rules (124), only when the outputs (122) corresponding to the negative feedback are changed, using the simulation, to the changed outputs (122) or the improved outputs (122).

8. The method (300) of claim 6, further comprising:
receiving confirmation data confirming that the outputs (122) corresponding to the negative feedback are changed, using the simulation, to the changed outputs (122) or the improved outputs (122); and
adjusting, via the computing device (102), of the programmatic application (114) based on the new rules (702) only when the confirmation data is received.

9. The method (300) of claim 1, wherein the new rules (702) represent one or more of:
changes to constraints of mathematical algorithms of the programmatic application (114);
new constraints to the mathematical algorithms of the programmatic application (114);
changes to existing code of the programmatic application (114); and
new respective code of the programmatic application (114).

10. A computing device (102) comprising:
a controller (202); and
a computer-readable storage medium (204) having stored thereon program instructions (206) that, when executed by the controller (202), causes the controller (202) to perform a set of operations comprising the method (300) of any one of claims 1 to 9.

11. A non-transitory computer-readable storage medium (204) having stored thereon program instructions (206) that, when executed by at least one computing device (102), causes the at least one computing device (102) to perform the method (300) of any one of claims 1 to 9.
